# EUROPÄISCHE PATENTSCHRIFT

(11) **EP 3 515 719 B1**
(45) Veröffentlichungstag und Bekanntmachung des Hinweises auf die Patenterteilung: **10.11.2021**
(21) Anmeldenummer: 17777521.0
(22) Anmeldetag: 20.09.2017
(51) Int. Cl.: B42C 19/08, B42D 25/24, B25J 15/00, B25J 9/04, B65H 5/12

(54) **SYSTEM UND VERFAHREN ZUR HERSTELLUNG EINES BUCHFÖRMIGEN AUSWEIS-, WERT- ODER SICHERHEITSDOKUMENTS**
SYSTEM AND METHOD FOR PRODUCING A BOOK-LIKE IDENTIFICATION, VALUABLE OR SECURITY DOCUMENT
SYSTÈME ET PROCÉDÉ PERMETTANT DE PRODUIRE UN DOCUMENT D'IDENTITÉ, DE VALEUR OU DE SÉCURITÉ EN FORME DE LIVRET

(30) Priorität: 20.09.2016 DE 102016218042
(43) Veröffentlichungstag der Anmeldung: 31.07.2019
(73) Patentinhaber: Bundesdruckerei GmbH, 10969 Berlin (DE)
(72) Erfinder: GÜMMER, Andreas, 27308 Hohenaverbergen (DE); TITZE, Thomas, 32425 Minden (DE); SCHULZ, Henrik, 30177 Hannover (DE)
(74) Vertreter: Richardt Patentanwälte PartG mbB
(86) Internationale Anmeldenummer: PCT/EP2017/073733
(87) Internationale Veröffentlichungsnummer: WO 2018/054947

(56) Entgegenhaltungen:
- WO-A1-2015/173761
- FR-A1- 2 957 905

## Beschreibung

Die Erfindung betrifft ein System und ein Verfahren zur Herstellung eines buchförmigen Ausweis-, Wert- oder Sicherheitsdokuments. Das System weist eine Halte- und Transportvorrichtung auf.

Buchförmige Ausweis-, Wert- oder Sicherheitsdokumente, beispielsweise Reisepässe, bestehen aus einem Einband und einem durch den Einband geschützten Passbuchblock, der personen- und/oder dokumentenspezifische Informationen aufweist. Der Passbuchblock weist mehrere Doppelseiten sowie eine Datenkarte auf. Die Datenkarte ist beispielsweise eine Kunststoff- oder papierbasierte Karte, auf der personen- und/oder dokumentenspezifische Informationen wie ein Passbild, Name oder Adresse des Nutzers oder eine Ausweisnummer aufgebracht sind, insbesondere auch in maschinenlesbarer Form. Die Doppelseiten können weitere personen- und/oder dokumentenspezifische Informationen enthalten oder beispielsweise als Visaseiten zur Aufnahme von Visastempel ausgebildet sein. Das Ausweis-, Wert- oder Sicherheitsdokument, insbesondere die Datenkarte, kann einen Chip aufweisen, auf dem personen- und/oder dokumentenspezifische Informationen gespeichert sind.

An einem Rand der Datenkarte ist eine flexible Lasche vorgesehen. Die Lasche ist entlang einer Naht mit den Doppelseiten sowie einem die Doppelseiten und die Datenkarte umschließenden Vorblatt zum Passbuchblock vernäht. Zum Schutz der Naht ist üblicherweise ein Fälzelband entlang der Naht vorgesehen.

Buchförmige Ausweis-, Wert- oder Sicherheitsdokumente dieser Art werden üblicherweise hergestellt, indem der Passbuchblock zusammengestellt und vernäht wird. Anschließend wird der Passbuchblock mit dem Einband verklebt und der so entstandene Passbuchrohling gefaltet.

Anschließend werden die freien Ränder des Passbuchrohling bearbeitet und das so entstandene Ausweis-, Wert- oder Sicherheitsdokument personalisiert, beispielsweise, indem in einem im Ausweis-, Wert- oder Sicherheitsdokument vorhandenen Chip personen- und/oder dokumentenspezifische Daten gespeichert werden oder indem weitere Merkmale in das Ausweis-, Wert- oder Sicherheitsdokument eingebracht werden, beispielsweise eine Perforation der Doppelseiten.

Für die einzelnen Verfahrensschritte ist jeweils eine Bearbeitungsvorrichtung vorgesehen. Die Datenkarte, der Passbuchblock, der Passbuchrohling und das Ausweis-, Wert- oder Sicherheitsdokument müssen zwischen diesen Bearbeitungsvorrichtungen transportiert werden, wobei vorzugsweise ein vereinzelter Transport erfolgt. Ein solcher vereinzelter Transport ermöglicht eine individuelle Zuordnung einer Datenkarte, eines Passbuchblocks, eines Passbuchrohlings oder eines Ausweis-, Wert- oder Sicherheitsdokuments zu einer Stückliste, die die Bestandteile und die Bearbeitungsschritte des Ausweis-, Wert- oder Sicherheitsdokuments festlegt. Die Datenkarte, der Passbuchblock, der Passbuchrohling oder das Ausweis-, Wert- oder Sicherheitsdokument werden in der jeweiligen Bearbeitungsvorrichtung abgelegt und nach der Bearbeitung wieder aufgenommen. Das Format der Datenkarte, des Passbuchblock, des Passbuchrohling oder des Ausweis-, Wert- oder Sicherheitsdokuments kann vor und nach der Bearbeitung unterschiedlich sein, so dass eine Aufnahme mit derselben Halteeinheit einer Transportvorrichtung nicht möglich sein kann.

WO 2015/173761 A1 offenbart eine Halte- und Transportvorrichtung, wobei die Halte- und Transportanordnung aufweist: zumindest einen verdreh- und/oder verschwenkbaren mehrgelenkiger Arm, ein am mehrgelenkige Arm gelagertes Kopfteil, drei am Kopfteil angeordnete Halteeinheiten, wobei jede Halteeinheit einen Antrieb zum Betätigen der Halteeinheit aufweist, und eine Steuerung, zur gleichzeitigen Ansteuerung der Antriebe der Halteeinheiten und zum Bewegen des mehrgelenkigen Armes. WO 2015/173761 A1 erwähnt keine Bücher oder Dokumente.

Aufgabe der Erfindung ist es, eine Halte- und Transportvorrichtung sowie ein Verfahren zum Betrieb einer solchen Halte- und Transportvorrichtung bereitzustellen, die eine flexiblere Transportmöglichkeit für ein Herstellungsverfahren eines Ausweis-, Wert- oder Sicherheitsdokuments bereitstellt. Aufgabe der Erfindung ist es des Weiteren, ein verbessertes System sowie ein verbessertes Verfahren zur Herstellung eines Ausweis-, Wert- oder Sicherheitsdokuments bereitzustellen.

Die der Erfindung zugrunde liegenden Aufgaben werden mit den Merkmalen der unabhängigen Patentansprüche gelöst. Ausführungsformen der Erfindung sind in den abhängigen Ansprüchen angegeben.

Ausführungsformen der Erfindung sind besonders vorteilhaft, da ein schneller Wechsel zwischen den einzelnen Halteeinheiten erfolgen kann. Vorzugsweise kann der Wechsel zwischen den Halteeinheiten während eines Schwenk- und/oder Drehvorganges des Arms erfolgen. Es ist beispielsweise nicht erforderlich, den Arm zum Wechseln der Halteeinheit in eine bestimmte Position zu bewegen und/oder eine Halteeinheit aus einem Magazin zu entnehmen und auf den Kopfteil des Armes aufzusetzen. Insbesondere können mehrere Güter gleichzeitig gehalten und transportiert werden bzw. nacheinander aufgenommen und abgelegt werden, wodurch sich die Transportzeiten verringern.

Unter einem "Ausweis-, Wert- oder Sicherheitsdokument" wird im Folgenden ein papier- und/oder kunststoffbasiertes Dokument verstanden, auf dem personenspezifische und/oder dokumentenspezifische Informationen optisch lesbar aufgebracht sind, die eine Identifizierung des Nutzers oder des Dokumentes, beispielsweise für die Freigabe und Nutzung bestimmter Dienste oder Funktionen ermöglicht. Darunter fallen zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Frachtbriefe oder sonstige Berechtigungsnachweise. Beispielsweise kann das Dokument auch ein Wertgutschein oder eine Zugangskarte sein. Das Dokument kann einen Chip oder andere elektronische Bauteile aufweisen, insbesondere für die Speicherung personenspezifische und/oder dokumentenspezifische Informationen.

Unter einer "Datenkarte" wird im Folgenden eine in einem Buchblock eines Ausweis-, Wert oder Sicherheitsdokument angeordnete papier- oder kunststoffbasierte Karte verstanden, auf der personenspezifische und/oder dokumentenspezifische Informationen optisch lesbar aufgebracht sind, die eine Identifizierung des Nutzers oder des Dokumentes, beispielsweise für die Freigabe und Nutzung bestimmter Dienste oder Funktionen ermöglicht. Die Datenkarte kann einen Chip oder andere elektronische Bauteile aufweisen, insbesondere für die Speicherung personenspezifische und/oder dokumentenspezifische Informationen.

Nach einem ersten Aspekt der Erfindung ist System zur Herstellung eines buchförmigen Ausweis-, Wert- oder Sicherheitsdokuments vorgesehen, wobei das Ausweis-, Wert- oder Sicherheitsdokument einen Einband sowie einen Passbuchblock umfassend eine Datenkarte, mehrere Doppelseiten, ein Vorblatt und ein Fälzelband aufweist. Die Datenkarte weist eine entlang eines Randes mit der Datenkarte verbundene flexible Lasche auf, wobei die Datenkarte mit der flexiblen Lasche, die Doppelseiten, das Vorblatt und das Fälzelband mit einer Naht miteinander vernäht sind. Der Einband ist mit einer Innenseite flächig mit einer Außenseite des Vorblattes verklebt, wobei der Einband und der Passbuchinhalt gefaltet und anschließend miteinander verklebt werden. Der Passbuchrohling wird in einer Klebe- und Faltvorrichtung hergestellt, indem der Passbuchblock und der Einband miteinander verklebt und der Passbuchrohling gefaltet wird. Das System weist auf:
- zumindest zwei Vorrichtungen zur Bereitstellung eines Ausweis-, Wert- oder Sicherheitsdokuments, eines Passbuchrohlings, eines Passbuchblocks, eines Einband, Doppelseiten, eines Vorblatts und/oder einer Datenkarte, und
- eine erfindungsgemäße Halte- und Transportvorrichtung, wobei die Halte- und Transportanordnung aufweist:
   - zumindest einen verdreh- und/oder verschwenkbaren mehrgelenkiger Arm,
   - ein am mehrgelenkige Arm gelagertes Kopfteil,
   - zumindest zwei, insbesondere drei, am Kopfteil angeordnete Halteeinheiten, wobei jede Halteeinheit einen Antrieb zum Betätigen der Halteeinheiten aufweist, und
   - eine Steuerung, zur gleichzeitigen Ansteuerung der Antriebe der Halteeinheiten und zum Bewegen des mehrgelenkigen Armes.

Die Halte- und Transportvorrichtung ist zur gleichzeitigen Aufnahme und zum gleichzeitigen Transport des Ausweis-, Wert- oder Sicherheitsdokuments, des Passbuchrohlings, des Passbuchblocks, des Einbandes, der Doppelseiten und/oder der Datenkarte zwischen Bearbeitungsvorrichtungen und/oder Bereitstellungsvorrichtungen ausgebildet.

Im mehrgelenkigen Arm der Halte- und Transportvorrichtung kann beispielsweise eine zentrale Einrichtung zur Energieversorgung der Antriebe vorgesehen sein, wobei die Antriebe jeweils mit der Einrichtung verbunden sind. Die Halteeinheiten können dadurch kompakter ausgebildet werden.

Die Einrichtung kann beispielsweise ein flüssiges oder gasförmiges Antriebsmedium bereitstellen und die Antriebe sind über Leitungen mit der Einrichtung verbunden. Beispielsweise ist das Medium Druckluft. Durch die Verwendung eines solchen Antriebsmediums ermöglicht eine einfache Koppelung zwischen dem mehrgelenkigen Arm bzw. der zentralen Einrichtung und den Halteeinheiten.

Die Halteeinheiten sind unterschiedlich ausgebildet, so dass mit der Halte- und Transportvorrichtung unterschiedliche Gegenstände, die beispielsweise bei der Herstellung eines Ausweis-, Wert- oder Sicherheitsdokuments benötigt werden, oder verschiedene Zwischenprodukt des Herstellungsverfahrens gehalten und transportiert werden können. Beispielsweise sind die Halteeinheiten jeweils zum Halten und zum Transport einer Datenkarte, eines Einbandes, eines Vorlageblattes eines Stapels aus Doppelseiten, eines Passbuchblocks, eines Passbuchrohlings und/oder eines Ausweis-, Wert- oder Sicherheitsdokuments ausgebildet. Das Halten und das Transportieren dieser Gegenstände und Zwischenprodukte erfordert jeweils eine spezifische Halteeinheit, die zum einen an das jeweilige Format sowie die jeweiligen Eigenschaften der Gegenstände und Zwischenprodukte, beispielsweise der Flexibilität und der Empfindlichkeit gegen physische Beanspruchungen, angepasst ist. Zum anderen ist gegebenenfalls auch eine Anpassung an die jeweils folgenden Verfahrensschritte erforderlich. So ist es beispielsweise beim Halten und beim Transport einer Datenkarte erforderlich, dass ein auf der Datenkarte vorgesehenes Identifikationsmerkmal optisch auslesbar ist, oder ein Einband muss so gehalten und/oder transportiert wird, dass dieser flächig auf einen Passbuchblock aufgelegt und aufgeklebt werden kann.

Zumindest eine Halteeinheit der Halte- und Transportvorrichtung weist beispielsweise einen Unterdrucksauger mit zumindest einem Saugelement auf, mit der ein flächiges Gut, beispielsweise eine Datenkarte, ein Vorblatt, einzelne Doppelseiten oder ein Einband einfach gehalten und transportiert werden können.

Der Unterdrucksauger kann mehrere, im Wesentlichen in einer Ebene verteilt angeordnete Saugelemente aufweist. Mit mehreren verteilt angeordneten Saugelementen ist eine Fixierung eines flächigen Gutes über die gesamte Fläche möglich.

Die Saugelemente können in einer Saugposition, in der ein flächiges Gut an den Saugelementen gehalten ist, in zumindest einer Richtung gewölbten Ebene angeordnet sein, so dass das flächige Gut in der gewölbten Ebene gebogen wird. Durch diese Anordnung der Saugelemente kann das Gut gebogen werden, wodurch das Abheben des Gutes von einem Stapel vereinfacht sein kann. Ein unmittelbar an diesem Gut anliegendes zweites Gut wird durch die Eigensteifigkeit nicht gebogen, so dass sich zwischen der Gütern ein Spalt bildet, der ein Anhaften der beiden Güter aneinander verhindert.

Des Weiteren wird die Ausdehnung des Gutes in einer quer zur Ansaugrichtung Richtung verkürzt, während das darunterliegende Gut, da dieses nicht durchgebogen wird, in dieser Richtung eine größere Ausdehnung hat. An einem Magazin, in dem das Gut gelagert ist, können Abstreifer vorgesehen sein, die durch gegeneinander gerichtete Kanten gebildet sind, deren Abstand kleiner ist als die Ausdehnung in Richtung des flächigen Gutes in ebenem Zustand aber größer als die Ausdehnung in Richtung des gebogenen Gutes. Das gehaltene, gebogene Gut kann also zwischen den Abstreifern hindurch angehoben werden, während das darunterliegende, nicht gebogene Gut durch die Abstreifer zurückgehalten wird. Somit ist sichergestellt, dass nur ein Gut angehoben wird.

Alternativ kann eine Anlagefläche vorgesehen sein, wobei am Rand der Anlagefläche ein im Wesentlichen umlaufend um die Anlagefläche angeordnetes Dichtelement vorgesehen sein kann. Das Dichtungselement ist beispielsweise so ausgebildet, dass der Unterdrucksauger mit dem Dichtungselement lediglich am Rand des aufzunehmenden Gutes anliegt. Das Gut ist so vor Beschädigungen an der Oberfläche geschützt.

Um ein Anhaften des Gutes am Unterdrucksauger nach dem Transport zu verhindern, kann Löseelement vorgesehen sein, das von einer Ruheposition, in der das Löseelement nicht über die Ebene der Saugelemente und/oder der Ebene der Anlagefläche hinausragt und einer Löseposition, in der das Löseelement über die Ebene der Saugelemente und/oder der Ebene der Anlagefläche hinausragt, bewegbar ist. Das Abstreifelement kann das Gut von der Anlagefläche weg drücken bzw. gegen eine Auflage drücken, bis sich der Unterdrucksauger von dem gut entfernt hat und dieses nicht mehr am Unterdrucksauger anhaftet.

Optional können Mittel zum Ausrichten der Halteeinheit relativ zum aufzunehmenden Gut vorgesehen sein. Diese Mittel können die Halteeinheit und somit die Saugelemente so ausrichten, dass das Gut flächig an den Saugelementen anliegen kann.

Zumindest eine Halteinheit kann beispielsweise zwei längliche, im Wesentlichen parallele, in einer Ebene angeordnete Halteelemente aufweist, wobei die Halteelemente in der Ebene bewegbar sind. Die Halteelemente bilden eine Gabel, wobei die Halteelemente aufeinander zu bewegt werden können, um zwischen sich einen Gegenstand, beispielsweise eine Datenkarte zu klemmen. Diese Art der Halteeinheit hat den Vorteil, dass die Vorderseite und die Rückseite des gehaltenen Gegenstandes, beispielsweise einer Datenkarte, im Wesentlichen frei bleiben. Beispielsweise kann ein auf der Datenkarte vorgesehenes Identifikationsmerkmal optisch erfasst werden.

Vorzugsweise ist ein Haltesteg vorgesehen, der die Halteelemente verbindet, wobei der Haltesteg senkrecht zu den Halteelementen angeordnet ist. Die Halteelemente und der Haltesteg bilden eine U-förmige Aufnahme, in der ein Gegenstand an drei Seiten gehalten werden kann. Der Haltesteg kann beispielsweise als Anschlag beim Einschieben eines Gegenstandes wie einer Datenkarte dienen, sodass sichergestellt werden kann, dass diese stets in der gleichen Position in der Halteeinheit gehalten wird.

Die Halteelemente und der Haltesteg können jeweils eine Nut aufweisen, wobei die Nuten an den Haltestegen auf den einander zugewandten Flächen der Haltestege vorgesehen sind und die Nut des Haltesteges auf der zu den freien Enden der Halteelemente gerichteten Fläche vorgesehen ist, wobei sich die Nuten der Halteelemente insbesondere jeweils bis zum freien Ende der Halteelemente erstrecken. Die Nut ermöglicht eine bessere Fixierung des Gegenstandes in der Halteeinheit.

Die Nuten können jeweils von zwei parallelen Schenkeln begrenzt werden, wobei die Schenkel jeweils aufeinander zu bewegbar sind. Durch die Schenkel ist beispielsweise eine Anpassung der Höhe der Nut an die Dicke des zu haltenden Gegenstandes möglich. Darüber hinaus kann zusätzlich eine Klemmkraft durch die sich aufeinander zu bewegenden Schenkel erzeugt werden, so dass ein sicherer Halt des Gegenstandes möglich ist.

Alternativ oder ergänzend kann zumindest eine Halteinheit zwei gegenüberliegende Klemmbacken aufweisen, zwischen denen ein Ausweis-, Wert- oder Sicherheitsdokument, ein Passbuchrohling, ein Passbuchblock und/oder eine Datenkarte geklemmt werden kann. Eine solche Halteeinheit kann beispielsweise das Ausweis-, Wert- oder Sicherheitsdokument, den Passbuchrohling, den Passbuchblock und/oder die Datenkarte so halten, dass die Ränder frei zugänglich sind, beispielsweise für eine Bearbeitung der Ränder.

In einer solchen Ausführungsform kann die Außenkontur der Klemmbacken jeweils die Form des Ausweis-, Wert- oder Sicherheitsdokuments abbilden oder kleiner sein als diese. Wird durch die Klemmbacken die Form des Ausweis-, Wert- oder Sicherheitsdokuments abgebildet, kann die Klemmbacke als Führung für ein Fräswerkzeug genutzt werden, das die freien Ränder des Ausweis-, Wert- oder Sicherheitsdokuments bearbeitet, beispielsweise, um das gewünschte Format des Ausweis-, Wert- oder Sicherheitsdokuments herzustellen.

Zumindest eine Halteinheit kann einen Aufsatz aufweisen, der einen Unterdruck erzeugen kann. Dies ermöglicht beispielsweise die Aufnahme eines Einbandes oder eines andere Gutes, der so aufgenommen werden soll, dass eine der Flächen für die weitere Bearbeitung vollständig zugänglich ist. Der Einband kann aufgenommen und flächig auf den Passbuchblock aufgelegt und an diesem fixiert bzw. vorfixiert werden.

Um eine sichere Übergabe des gehaltenen Gegenstandes oder eine genau Bearbeitung des Gegenstandes zu gewährleisten, ist es vorteilhaft, den Gegenstand in einer definierten Ausrichtung in die Halteeinheit zu legen bzw. von dieser aufnehmen zu lassen. Vorzugsweise ist hierzu eine Erkennungseinrichtung und/oder eine Ausrichteeinrichtung für das Ausweis-, Wert- oder Sicherheitsdokument, den Passbuchrohling, den Passbuchblock und/oder die Datenkarte vorgesehen ist, wobei die Erkennungseinrichtung zur Erfassung des Typs, der Lage und der Ausrichtung des Ausweis-, Wert- oder Sicherheitsdokument, des Passbuchrohling, des Passbuchblock und/oder der Datenkarte konfiguriert ist. Die Steuerung ist des Weiteren zum Steuern des Antrieb des Kopfteils in Abhängigkeit von dem Typ des Ausweis-, Wert- oder Sicherheitsdokument, des Passbuchrohling, des Passbuchblock und/oder der Datenkarte konfiguriert, wobei die Steuerung zur Steuerung des Armes in Abhängigkeit von der Lage des Ausweis-, Wert- oder Sicherheitsdokument, des Passbuchrohling, des Passbuchblock und/oder der Datenkarte konfiguriert ist, und wobei die Steuerung zum Steuern des Antrieb und der Kupplung der Halteeinheit in Abhängigkeit von der Ausrichtung des Ausweis-, Wert- oder Sicherheitsdokument, des Passbuchrohling, des Passbuchblock und/oder der Datenkarte konfiguriert ist. Durch die Erkennungseinrichtung und die Steuerung kann also der Typ und die Ausrichtung des zu haltenden Gegenstandes erfasst, die benötigte Halteeinheit ausgewählt und der Arm sowie die Halteeinheit so bewegt werden, dass der Gegenstand in einer gewünschten Orientierung aufgenommen werden kann.

Der Kopf kann dreh- und/oder verschwenkbar am mehrgelenkigen Arm der Halte- und Transportvorrichtung gelagert sein, wobei ein Antrieb zum Verdrehen und/oder Verschwenken des Kopfes vorgesehen ist. Dadurch können die Halteeinheiten flexibler bewegt werden.

Die Vorrichtungen des Systems können eine Prüfvorrichtung, eine Vorrichtung zum Anbringen einer Lasche an einer Datenkarte, eine Zusammentragvorrichtung für einen Passbuchblock, eine Vorrichtung zur Anbringung eines Fälzelbandes an einem Passbuchblock, eine Nähvorrichtung für einen Passbuchblock, eine Klebe- und Faltvorrichtung für einen Passbuchrohling, eine Endbearbeitungsvorrichtung für einen Passbuchrohling oder eine Vorrichtung zur Personalisierung eines Ausweis-, Wert- oder Sicherheitsdokuments sein.

Eine erste Vorrichtung ist beispielsweise zum Anbringen einer Lasche an einer Datenkarte, eine zweite Vorrichtung zum Bereitstellen eines Vorblattes mit einem daran fixierten Fälzelband und eine dritte Vorrichtung zum Bereitstellen von Doppelseiten ausgebildet, wobei eine vierte Vorrichtung zum Sammeln der der Doppelseiten, der Datenkarte und des Vorblattes ausgebildet ist.

Eine erste Halteeinheit ist beispielsweise zur Aufnahme einer Datenkarte, eine zweite Halteeinheit zur Aufnahme eines Vorblattes und eine dritte Aufnahme zur Aufnahme eines Passbuchblocks ausgebildet, wobei eine Transportvorrichtung zum Transport der Doppelseiten von der dritten zur vierten Vorrichtung vorgesehen ist. Das System ist zur Durchführung der folgenden Schritte ausgebildet:
a) Bewegen der Halte- und Transportvorrichtung zur ersten Vorrichtung und aufnehmen einer Datenkarte mit der ersten Halteeinheit,
b) Bewegen der Halte- und Transportvorrichtung zur zweiten Vorrichtung und Aufnehmen eines Vorblattes mit der zweiten Halteeinheit,
c) Bewegen der Halte- und Transportvorrichtung zur vierten Vorrichtung,
d) Aufnehmen eines auf der vierten Vorrichtung liegenden Passbuchblocks mit der dritten Halteeinheit,
e) Ablegen des Vorblattes mit der zweiten Halteeinheit auf der vierten Vorrichtung,
f) Ablegen der Datenkarte mit der ersten Halteeinheit auf dem Vorblatt auf der vierten Vorrichtung,
g) Auflegen der Doppelseiten auf das Vorblatt und die Datenkarte auf der vierten Vorrichtung mit der Transportvorrichtung,
h) Ausrichten der Doppelseiten, des Vorblattes und der Datenkarte relativ zueinander auf der vierten Vorrichtung,
i) gleichzeitig zu Schritt g) und h) Ablage des Passbuchblocks an einer fünften Vorrichtung, und
j) Wiederholen der Schritten a) bis i).

Nach einem weiteren Aspekt der Erfindung ist ein Verfahren zum Betrieb eines erfindungsgemäßen Systems, wobei das System eine Halte- und Transportvorrichtung aufweist, vorgesehen. Das Verfahren weist die folgenden Schritte auf:
a) Bewegen der Halte- und Transportvorrichtung zur ersten Vorrichtung und Aufnehmen einer Datenkarte mit der ersten Halteeinheit,
b) Bewegen der Halte- und Transportvorrichtung zur zweiten Vorrichtung und Aufnehmen eines Vorblattes mit der zweiten Halteeinheit,
c) Bewegen der Halte- und Transportvorrichtung zur vierten Vorrichtung,
d) Aufnehmen eines auf der vierten Vorrichtung liegenden Passbuchblocks mit der dritten Halteeinheit,
e) Ablegen des Vorblattes mit der zweiten Halteeinheit auf der vierten Vorrichtung,
f) Ablegen der Datenkarte mit der ersten Halteeinheit auf dem Vorblatt auf der vierten Vorrichtung,
g) Auflegen der Doppelseiten auf das Vorblatt und die Datenkarte auf der vierten Vorrichtung mit der Transportvorrichtung,
h) Ausrichten der Doppelseiten, des Vorblattes und der Datenkarte relativ zueinander auf der vierten Vorrichtung,
i) gleichzeitig zu Schritt g) und h) Ablage des Passbuchblocks an einer fünften Vorrichtung, und
j) Wiederholen der Schritten a) bis i).

Optional kann in Schritt a), b) und/oder d) eine Erfassung der Lage und/oder der Ausrichtung der Datenkarte, des Vorblattes und/oder des Passbuchblocks mit einer Erkennungsvorrichtung erfolgt und anschließend eine Ausrichtung der Halteeinheit relativ zur Datenkarte, zum Vorblatt und/oder zum Passbuchblock erfolgt

Das Ausweis-, Wert- oder Sicherheitsdokument, der Passbuchrohling, der Passbuchblock oder die Datenkarte können zur Bearbeitung an die jeweils ausgewählte Bearbeitungsstation übergeben werden. Alternativ kann eine Bearbeitung des Ausweis-, Wert- oder Sicherheitsdokument, des Passbuchrohling, des Passbuchblock und/oder der Datenkarte in der Halteeinheit erfolgen.

Ein Verfahren zur Herstellung eines Ausweis-, Wert- oder Sicherheitsdokuments mit einem oben beschriebenen System, kann folgende Schritte aufweisen:
- Aufnahme eines Ausweis-, Wert- oder Sicherheitsdokument, eines Passbuchrohling, eines Passbuchblock und/oder einer Datenkarte an der Annahmevorrichtung oder einer Bearbeitungsvorrichtung mit einem erfindungsgemäßen Verfahren zum Betrieb einer Halte- und Transportvorrichtung, und
- Transport des Ausweis-, Wert- oder Sicherheitsdokument, des Passbuchrohling, des Passbuchblock oder der Datenkarte zu einer Bearbeitungsvorrichtung und/oder zu einer Ubergabevorrichtung durch Verdrehen und/oder Verschwenken des Armes.

Nach dem Transport zur Bearbeitungsvorrichtung und/oder zur Übergabevorrichtung erfolgt beispielsweise eine Übergabe des Ausweis-, Wert- oder Sicherheitsdokument, des Passbuchrohling, des Passbuchblock und/oder der Datenkarte an die Bearbeitungsvorrichtung oder die Übergabevorrichtung.

Alternativ kann auch eine Bearbeitung des Ausweis-, Wert- oder Sicherheitsdokument, des Passbuchrohling, des Passbuchblock und/oder der Datenkarte in der Halteeinheit erfolgen.

Im Weiteren werden Ausführungsformen der Erfindung mit Bezugnahme auf die Zeichnungen erläutert. In diesen zeigen:
- Figur 1: eine perspektivische Ansicht eines buchförmigen Ausweis-, Wert- oder Sicherheitsdokument,
- Figuren 2 a)-f): Verfahrensschritte zur Herstellung des buchförmigen Ausweis-, Wert- oder Sicherheitsdokument aus Figur 1,
- Figur 3: eine schematische Darstellung eines Systems zur Herstellung eines buchförmigen Ausweis-, Wert- oder Sicherheitsdokuments,

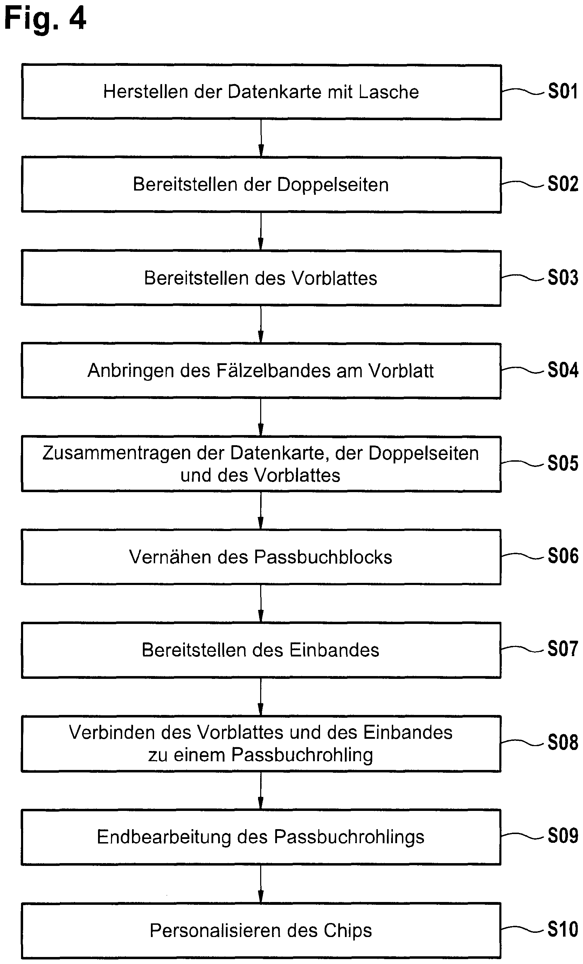

- Figur 4: ein Ablaufdiagramm eines Verfahrens zur Herstellung eines buchförmigen Ausweis-, Wert- oder Sicherheitsdokuments mit dem System aus Figur 3,
- Figur 5: eine Darstellung einer erfindungsgemäßen Halte- und Transportvorrichtung,
- Figuren 6a und 6b: Detailansichten einer ersten Ausführungsform einer Halteeinheit der Halte- und Transportvorrichtung aus Figur 5,
- Figuren 7a und: b eine Detailansicht einer zweiten Ausführungsform einer Halteeinheit der Halte- und Transportvorrichtung aus Figur 5, und
- Figur 8: eine Detailansicht einer dritten Ausführungsform einer Halteeinheit der Halte- und Transportvorrichtung aus Figur 5.

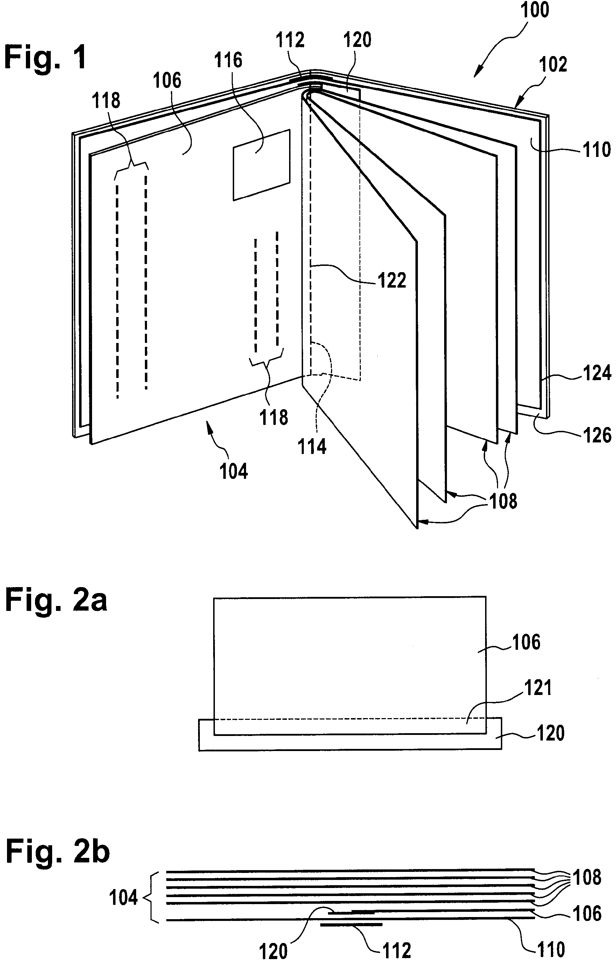

In Figur 1 ist ein buchförmiges Ausweis-, Wert- oder Sicherheitsdokument 100 gezeigt. Das Ausweis-, Wert- oder Sicherheitsdokument 100 ist beispielsweise ein Identifikationsdokument, insbesondere ein Reisepass oder ein Personalausweis.

Das Ausweis-, Wert- oder Sicherheitsdokument 100 weist einen Einband 102 sowie einen im Einband 102 gehaltenen Passbuchblock 104 auf. Der Passbuchblock 104 besteht aus einer Datenkarte 106, mehreren Doppelseiten 108, einem Vorblatt 110 sowie einem Fälzelband 112, die mit einer Naht 114 miteinander verbunden sind.

Die Datenkarte 106 ist eine kunststoff- oder papierbasierte Karte, auf der personen- und/oder dokumentenspezifische Informationen aufgebracht sind. Beispielsweise kann die Datenkarte 106 ein Passbild 116 und personenbezogene Informationen 118 eines Nutzers aufweisen. Die Informationen 118 sind vorzugsweise in einer maschinenlesbaren Form auf die Datenkarte 106 aufgebracht. Des Weiteren weist die Datenkarte 106 ein ebenfalls maschinenlesbares Identifikationsmerkmal auf, das die Datenkarte 106 eindeutig während des Herstellungsprozesses des Ausweis-, Wert- oder Sicherheitsdokuments 100 identifiziert. Die Datenkarte 106 kann des Weiteren einen Chip aufweisen, in dem personen- und/oder dokumentenspezifische Informationen gespeichert werden können. Insbesondere weist der Chip einen gesicherten Speicherbereich zur Speicherung der personen- und/oder dokumentenspezifischen Informationen auf. Des Weiteren kann die Datenkarte 106 sichtbare und/oder unsichtbare Sicherheitsmerkmale aufweisen, die ein Fälschen der Datenkarte 106 verhindern.

An der Datenkarte 106 ist eine flexible Lasche 120 vorgesehen, die aus einem Endlosband hergestellt ist. Die Lasche 120 besteht aus einem Gewebe, das mit einem flexiblen Kunststoffmaterial beschichtet und/oder ummantelt ist. Die Lasche 120 ist form- und/oder stoffschlüssig an der Datenkarte 106 befestigt und somit Teil der Datenkarte 106. Auf der Lasche 120 können weitere Sicherheitsmerkmale vorgesehen sein.

Die Doppelseiten 108 sind jeweils aus einem Bogen, vorzugsweise einem Papierbogen geschnitten und entlang ihrer Mittellinie 122 gefaltet. Die Doppelseiten 108 können bedruckt sein, beispielsweise mit personen- und/oder dokumentenspezifischen Informationen, Seitenzahlen oder andere Informationen. Die Doppelseiten 108 können des Weiteren für den Empfang von Stempel, beispielsweise Visastempel, vorbereitet sein. Vorzugsweise enthalten die Doppelseiten 108 ebenfalls Sicherheitsmerkmale, die ein Fälschen der Doppelseiten 108 verhindern. Die Sicherheitsmerkmale können beispielsweise aufgedruckt, in die Doppelseiten 108 eingearbeitet oder in diese eingebracht sein. Beispielsweise enthalten die Doppelseiten 108 eine Perforation, wobei sich die Perforation durch die Doppelseiten 108 konisch verjüngt.

Das Vorblatt 110 bildet den äußeren Abschluss des Passbuchblocks 104. Mit der Außenseite 124 des Vorblattes 110 wird der Passbuchblock 104 auf die Innenseite 126 des Einbandes 102 aufgeklebt.

Das Fälzelband 112 dient als Verstärkung des Nahtbereichs und ist vor dem Vernähen des Passbuchblocks 104 auf die Außenseite 124 des Vorblattes 110 aufgeklebt.

Der Einband 102 ist aus einem papier- und/oder kunststoffbasierten Material hergestellt und kann ebenfalls einen Chip aufweisen.

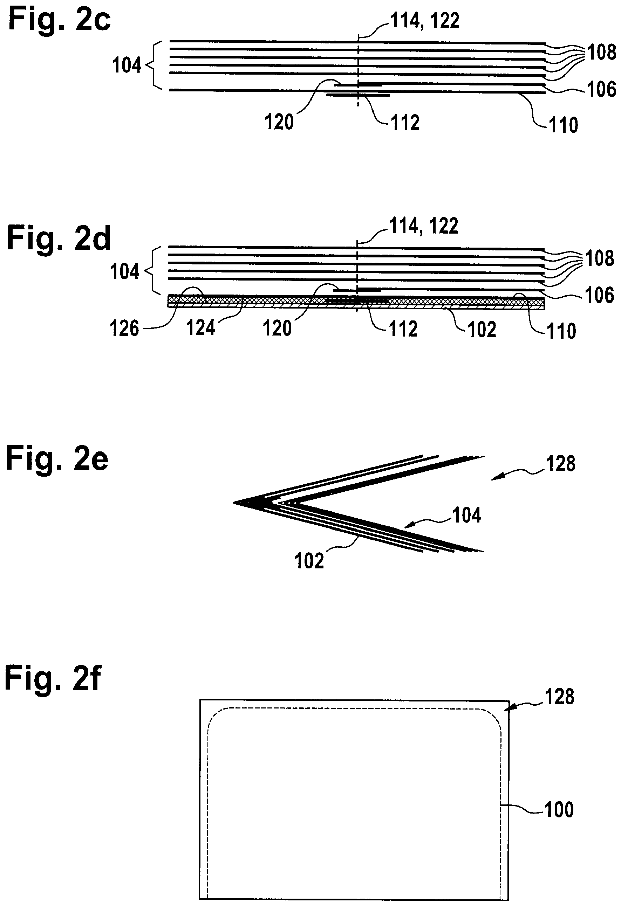

Die Herstellung des in Figur 1 gezeigten buchförmiges Ausweis-, Wert- oder Sicherheitsdokument 100 wird nachfolgend anhand der Figuren 2 a) bis 2 g) erläutert.

In einem ersten Verfahrensschritt wird die Datenkarte 106 bereitgestellt und die Lasche 120 an der Datenkarte angebracht (Figur 2a). Die Herstellung der Datenkarte 106 ist allgemein bekannt und wird nicht im Detail erläutert. Die Lasche 120 wird als Endlosband 220 geliefert, auf die gewünschte Länge geschnitten und in einem Überlappungsbereich 121 form- und/oder stoffschlüssig mit der Datenkarte 106 verbunden.

Anschließend wird das Fälzelband 112 auf den Nahtbereich des Vorblattes 110 aufgebracht und der Passbuchblock 104 bestehend aus den Doppelseiten 108, der Datenkarte 106 und dem Vorblatt 110 zusammengestellt (Figur 2b und 2c) und. Die Datenkarte 106 wird derart in den Passbuchblock 104 eingelegt, dass die Lasche 120 im Nahtbereich angeordnet ist.

Anschließend wird der Passbuchblock 104 entlang der Mittellinie 122 der Doppelseiten 108 vernäht (Figur 2d).

Nach dem Vernähen des Passbuchblocks 104 wird der Einband 102 bereitgestellt, mit der Innenseite 126 mit der Außenseite 124 des Vorblattes 110 verklebt und der so entstandene Passbuchrohling 128 gefaltet (Figuren 2e und 2f).

Abschließend werden die freien Ränder des Passbuchrohlings 128 bearbeitet und so der Passbuchrohling 128 auf das endgültige Format des Ausweis-, Wert- oder Sicherheitsdokument 100 geschnitten (Figur 2g). Als freie Ränder werden die an den Buchrücken angrenzenden Ränder sowie der dem Buchrücken gegenüberliegende Rand des Passbuchrohling 128 bzw. des Ausweis-, Wert- oder Sicherheitsdokument 100 angesehen.

Nachfolgend können weitere Sicherheitsmerkmale, beispielsweise eine Perforation, auf die Doppelseiten 108 aufgebracht werden.

Nach der Herstellung des Ausweis-, Wert- oder Sicherheitsdokument 100 erfolgt üblicherweise eine Qualitätskontrolle und optional ein Personalisieren des Chips.

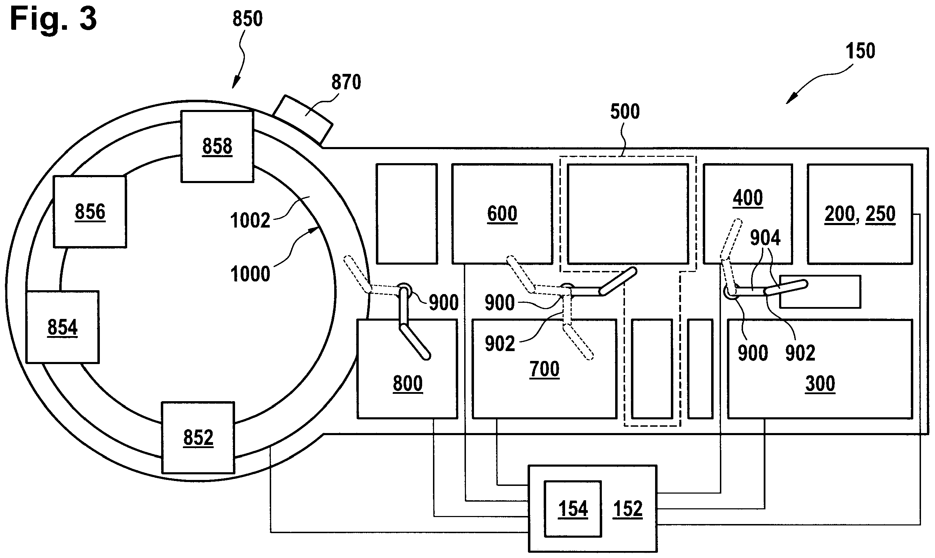

Die Herstellung eines solches Ausweis-, Wert- oder Sicherheitsdokuments erfolgt in einem in Figur 3 schematisch dargestellten System 150. Das System 150 hat eine Vorrichtung 200 zur Herstellung einer Datenkarte 106 mit einer daran angebrachten flexiblen Lasche 120, eine Zusammenstellvorrichtung 300 für den Passbuchblock 104, eine Vorrichtung 400 zur Bereitstellung und Anbringung des Fälzelbandes 112, eine Vorrichtung 500 zum Sammeln und Verbinden der Doppelseiten 108, des Vorblattes 110, des Fälzelbandes 112 sowie der Lasche 120 zu einem Passbuchblock 104, eine Bereitstellungsvorrichtung 600 für den Einband, eine Klebe- und Faltvorrichtung 700 eine Endbearbeitungsvorrichtung 800, eine Personalisierungsvorrichtung 850 und eine Übergabevorrichtung 870.

Des Weiteren sind Transport- und Haltevorrichtungen 900, 1000 vorgesehen, um die Datenkarte 106, das Vorblatt 110, den Einband 102, die Doppelseiten 108, den Passbuchblock 104, den Passbuchrohling 150 und/oder das Ausweis-, Wert- oder Sicherheitsdokument 100 zwischen den Vorrichtungen 200, 300, 400, 500, 600, 700, 800 vereinzelt zu transportieren.

Darüber hinaus ist eine Annahmevorrichtung 250 für Datenkarten vorgesehen, die in der hier gezeigten Ausführungsform Teil der Vorrichtung 200 ist. Die Annahmevorrichtung 250 kann Datenkarten 106 einzeln oder blockweise entgegennehmen, vereinzelt der weiteren Herstellung zuführen kann.

Des Weiteren ist eine Steuerung 152 vorgesehen, die mit den Vorrichtungen 200, 250, 300, 400, 500, 600, 700, 800 sowie den Transport- und Haltevorrichtungen 900, 1000 gekoppelt ist.

Die Vorrichtung 200 ist zur Herstellung einer Datenkarte 106 mit einer daran angebrachten flexiblen Lasche 120 ausgebildet. Dazu kann die Vorrichtung 200 eine laschenlose Datenkarte 106 von der Annahmevorrichtung 250 annehmen und eine flexible Lasche 120 an dieser anbringen. Die Lasche 120 wird beispielsweise als Endlosband 220 angeliefert und auf die gewünschte Länge geschnitten, wobei die Endbereiche des Endlosbandes versiegelt werden, um ein Ausfasern zu verhindern. Anschließend wird die Lasche 120 mit einem Ultraschallschweißverfahren an der Datenkarte 106 befestigt. Nach dem Anbringen der Lasche 120 erfolgt eine Qualitätskontrolle und eine Erfassung eines auf der Datenkarte 106 vorgesehenen Identifikationsmerkmals.

Das Identifikationsmerkmal wird anschließend an die Steuerung 152 übermittelt und von der Steuerung 152 auf eine in einem Speicher 154 gespeicherte, zu dem Identifikationsmerkmal korrespondierende Stückliste zugegriffen, die die Anzahl und Art der Doppelseiten 108, gegebenenfalls die Art des Vorblattes 110, die Art des Einbandes 102 und weitere herstellungsspezifische Merkmale des herzustellenden Ausweis-, Wert- oder Sicherheitsdokuments 100 definiert.

Beispielsweise hat jede Datenkarte 106 ein Identifikationsmerkmal, dass die Datenkarte 106 eindeutig identifiziert. Das Identifikationsmerkmal kann aber auch lediglich einen Verweis auf eine Stückliste enthalten bzw. eine Zuordnung zu einer Stückliste enthalten, ohne Detailinformationen zur individuellen Datenkarte 106 zu enthalten.

Die Stückliste kann anschließend an die nachfolgenden Vorrichtungen 300, 400, 500, 600, 700, 800 sowie den Transport- und Haltevorrichtungen 900, 1000 übermittelt werden, an welchen sich die Datenkarte befindet oder die Bestandteile für das der Datenkarte zugeordnete Ausweis-, Wert- oder Sicherheitsdokument 100 herstellen.

Die Steuerung ist vorzugsweise so ausgebildet, dass diese die Position der Datenkarte 106 bzw. der Bestandteile des der Datenkarte 106 zugeordneten Ausweis-, Wert- oder Sicherheitsdokument 100 nachverfolgen kann. Beispielsweise kann das Identifikationsmerkmal der Datenkarte 106 an den jeweiligen Vorrichtungen erfasst und an die Steuerung 152 übermittelt werden. Anschließend kann die Steuerung 152 die jeweilige Stückliste bzw. die erforderliche Bestandteile für die Herstellung des Ausweis-, Wert- oder Sicherheitsdokument 100 an die jeweilige Vorrichtung 300, 400, 500, 600, 700, 800 übermitteln.

Die Zusammenstellvorrichtung 300 kann in Abhängigkeit von der Stückliste, die nach dem Erfassen des Identifikationsmerkmals ermittelt wird, die Anzahl und Art der Doppelseiten 108 ermitteln, diese bereitstellen, personalisieren und in einer gewünschten Reihenfolge zusammenstellen.

Die Vorrichtung 400 kann ein Fälzelband 112 bereitstellen und an einem bereitgestellten Vorblatt 110 im Nahtbereich anbringen.

In der Vorrichtung 500 werden die personalisierten und bereitgestellten Doppelseiten 108, das Vorblatt 110 sowie die Datenkarte 106 zu einem Passbuchblock 104 zusammengefasst und entlang der Mittellinie 122 mit einer Naht 114 miteinander verbunden.

Die Bereitstellungsvorrichtung 600 für den Einband stellt den Einband 102 in Abhängigkeit von der individuellen Stückliste und/oder dem Identifikationsmerkmals bereit und bringt eine Klebstoffschicht auf die Innenseite 126 des Einbandes 102 auf.

In der Klebe- und Falteinrichtung 700 wird der Einband 102 mit dem Passbuchblock 104 zu einem Passbuchrohling 150 verbunden und entlang der Mittellinie 122 gefaltet.

Die Endbearbeitungsvorrichtung 800 kann den gefalteten Passbuchrohling 150 auf die endgültige Form bzw. das endgültige Format des Ausweis-, Wert- oder Sicherheitsdokuments 100 schneiden.

Die Personalisierungsvorrichtung 850 kann individuelle Merkmale in das Ausweis-, Wert- oder Sicherheitsdokument 100 einbringen, beispielsweise eine Laserperforation, oder personen- und/oder dokumentenspezifische Informationen in einem Chip des Ausweis-, Wert- oder Sicherheitsdokuments 100 speichern. In der hier gezeigten Ausführungsform hat die Personalisierungsvorrichtung 850 eine Einheit 852 zum Auffalten des Ausweis-, Wert- oder Sicherheitsdokuments 100, eine Einheit 854 zum Einbringen einer Laserperforation in die Seiten des Ausweis-, Wert- oder Sicherheitsdokuments 100, eine Einheit 856 zum Schließen des Ausweis-, Wert- oder Sicherheitsdokuments 100 sowie eine Einheit 858 zum Beschreiben des Chips des Ausweis-, Wert- oder Sicherheitsdokuments 100.

Das System ist derart konfiguriert, dass zwischen den Vorrichtungen 200, 300, 400, 500, 600, 700, 800, 850 eine direkte Übergabe des Ausweis-, Wert- oder Sicherheitsdokuments 100 bzw. von dessen Bestandteilen erfolgt. Optional können aber zwischen einzelnen Vorrichtungen 200, 300, 400, 500, 600, 700, 800, 850 auch Übergabe- oder Pufferstationen vorgesehen sein.

Die Übergabevorrichtung 870 kann die hergestellten und personalisierten Ausweis-, Wert- oder Sicherheitsdokumente 100 sammeln und/oder an ein nachfolgendes System zum Sammeln und Verpacken übergeben.

Zwischen den Einheiten 852, 854, 856, 858 der Personalisierungsvorrichtung 850 sowie der Übergabevorrichtung 870 ist eine Halte- und Transportvorrichtung 1000 mit zwei ringförmigen Führungseinheiten 1002 vorgesehen, in denen jeweils eine Halteaufnahme 1006 verschiebbar gelagert ist, so dass ein in der Halteaufnahme 1006 eingelegtes Ausweis-, Wert- oder Sicherheitsdokument 100 zwischen den Einheiten 852, 854, 856, 858 der Personalisierungsvorrichtung 850 und der Übergabevorrichtung 870 transportiert werden kann.

Zwischen den Vorrichtungen 200, 300, 400, 500, den Vorrichtungen 500, 600, 700 bzw. der Vorrichtung 800 und der Halte- und Transportvorrichtung 1000 sind jeweils Halte- und Transportvorrichtungen 900 vorgesehen, die einen mehrgelenkigen Arm 902 aufweisen, der aus mehreren Segmenten 904 besteht, wobei jeweils benachbarte Segmente 904 relativ zueinander verschwenkbar und/oder verdrehbar sind. Der Arm 902 ist mit einem an einem Segment 904 vorhandenen Fuß 906 im System 150 gehalten. Alternativ kann der Fuß 906 verschiebbar gelagert sein, beispielsweise auf einer Schiene, um den Bewegungsradius der Halte- und Transportvorrichtung 900 zu vergrößern.

Am freien Ende des Armes 902 ist ein Kopfteil 908 vorgesehen, das in der hier gezeigten Ausführungsform verdrehbar am Arm 902 gelagert ist. Alternativ oder zusätzlich kann das Kopfteil 908 auch verschwenkbar oder anderweitig bewegbar am Arm 902 gelagert sein. Am Arm 902 ist des Weiteren ein Antrieb 910 zum Drehen des Kopfteiles 908 relativ zum Arm 902 vorgesehen. Der Antrieb 910 ist beispielsweise ein Zahnradantrieb, ein Riemenantrieb oder ein anderer Antrieb, der geeignet ist, das Kopfteil 908 zu drehen. Optional kann auch eine Schrittmotorsteuerung vorgesehen sein.

Am Kopfteil 908 sind mehrere Halteeinheiten 912, 914, 916 mit jeweils einem Antrieb 918, 920, 922 vorgesehen. Die Halteeinheiten 912, 914, 916 sind jeweils zum Halten einer Datenkarte 106, eines Vorblatt 110, von Doppelseiten 108, eines Passbuchblocks 104, eines Einbandes 102, eines Passbuchrohlings 128 oder eines Ausweis-, Wert- oder Sicherheitsdokuments 100 ausgebildet. Des Weiteren ist eine Steuerung 924 vorgesehen, die die Antriebe 910, 918, 920, 922 gleichzeitig ansteuern kann.

Durch Verschenken und/oder Verdrehen des Armes 902 bzw. dessen Segmente 902 und/oder durch Verschwenken und/oder Verdrehen des Kopfteils 908 können die Halteeinheiten 912, 914, 916 so bewegt werden, dass durch Ansteuern der Antriebe 918, 920, 922 Halteeinheiten 912, 914, 916 jeweils eine Datenkarte 106, ein Vorblatt 110, Doppelseiten 108, einen Passbuchblock 104, einen Einband 102, einen Passbuchrohling 128 oder ein Ausweis-, Wert- oder Sicherheitsdokument 100 aufnehmen oder ablegen können.

Im Arm 902 ist eine zentrale Einrichtung 926 zur Energiebereitstellung für die Antriebe 918, 920, 922 vorgesehen. Die Antriebe 918, 920, 922 sind in der hier gezeigten Ausführungsform pneumatische Antriebe und die zentrale Einrichtung 926 stellt Druckluft bereit. Die Antriebe 918, 920, 922 sind mit Druckluftleitungen 928, 930, 932 mit der zentralen Einrichtung 926 verbunden.

Alternativ sind auch andere Antriebsformen und somit auch andere Formen der Energiebereitstellung möglich. Beispielsweise kann die zentrale Einrichtung 926 statt Druckluft ein anderes flüssiges oder gasförmiges Antriebsmedium bereitstellen. Alternativ ist beispielsweise auch eine Bereitstellung von Strom möglich.

Die Funktionsweise der Halte- und Transportvorrichtung 900 wird nachfolgend anhand der zwischen den Vorrichtungen 200, 300, 400, 500 vorgesehen Halte- und Transportvorrichtung 900 erläutert.

Die Halteeinheiten 912 und 914 weisen jeweils einen Unterdrucksauger auf, der ein flächiges Gut, beispielsweise eine einzelne Datenkarte 106 oder ein einzelnes Vorblatt 110 aufnehmen kann. Die Halteeinheit 916 weist ein nachfolgend im Detail beschriebenes Halteelement zur Aufnahme von mehreren flächigen Elementen, beispielsweise von zusammengetragenen Doppelseiten 108 oder einem Passbuchblock 104, auf.

In einem ersten Schritt wird die Halte- und Transportvorrichtung 1000 zur Vorrichtung 200 bewegt und eine Datenkarte 106 mit der ersten Halteeinheit 912 aufgenommen. Anschließend wird die Halte- und Transportvorrichtung 900 zur Vorrichtung 400 bewegt und ein gemäß der Stückliste bereitgestelltes und mit einem Fälzelband 112 versehenes Vorblatt 110 mit der zweiten Halteeinheit 914 aufgenommen.

Nachfolgend wird die Halte- und Transportvorrichtung 900 zur Vorrichtung 500 bewegt und ein dort bereits zusammengestellter und in der Vorrichtung 500 liegender Passbuchblocks 104 mit der dritten Halteeinheit 916 aufgenommen.

Nach dem Aufnehmen des Passbuchblocks 104 wird das in der zweiten Halteeinheit 914 gehaltene Vorblatt auf der Vorrichtung 500 abgelegt und anschließend die in der ersten Halteeinheit 912 gehaltene Datenkarte 106 auf das abgelegte Vorblatt 110 aufgelegt.

Nachfolgend werden die Doppelseiten 108 von einer weiteren Halte- und Transportvorrichtung von der Vorrichtung 300 aufgenommen und auf das Vorblatt 110 und die Datenkarte 106 aufgelegt und diese relativ zueinander ausgerichtet, beispielsweise durch rütteln.

Zeitgleich zu diesen Schritten wird der in der dritten Halteeinheit 916 gehaltene Passbuchblock in der Vorrichtung 500 zum Nähen abgelegt und die Halte- und Transportvorrichtung 900 zur Aufnahme einer nachfolgenden Datenkarte 106 zur Vorrichtung 200 und anschließend zur Aufnahme eines der nachfolgenden Datenkarte 106 zugeordneten Vorblattes 110 zur Vorrichtung 300 bewegt.

Die einzelnen Halteeinheiten 912, 914, 916 werden nachfolgend im Detail erläutert.

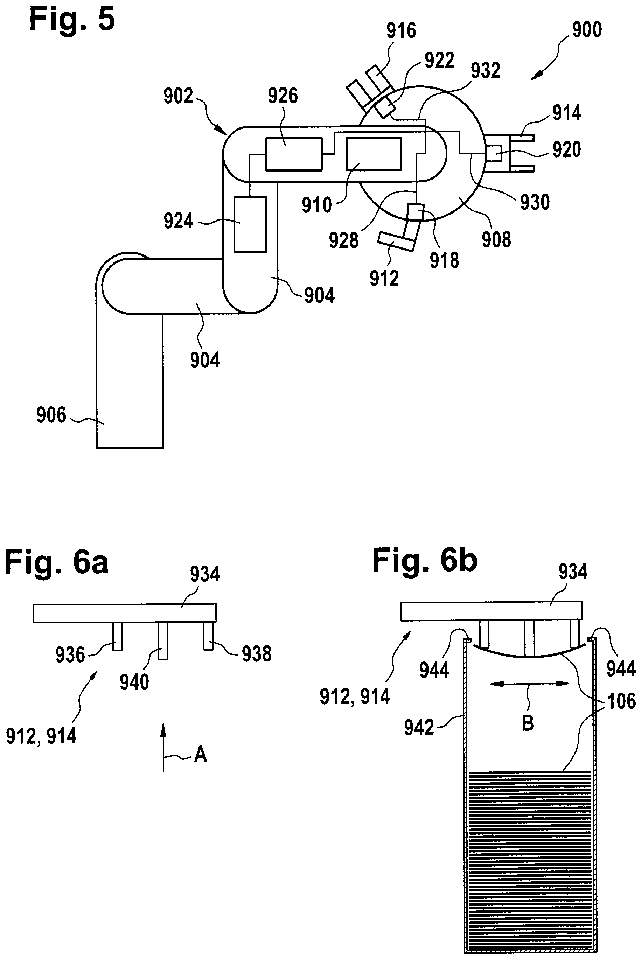

Die in Figur 6a gezeigten Halteeinheiten 912, 914 weisen jeweils einen Unterdrucksauger 934 auf, über den ein flächiges Gut mittels Unterdruck angesaugt und gehalten werden kann. Der Unterdrucksauger 934 weist mehrere Saugelemente 936, 938, 940 auf.

Die Saugelemente 936, 938 können in Ansaugrichtung A flexibel nachgeben. Wie in Figur 6a zu sehen ist, weisen die Saugelemente 936, 938 Faltenbälge auf, die auch bei einem Nachgeben in Saugrichtung eine ausreichende Abdichtung des Saugelementes 936, 938 gegenüber dem zu haltenden Gut sicherstellen. Das Saugelement 940 ist starr ausgebildet, so dass dieses in Ansaugrichtung nicht nachgeben kann.

Ein aufzunehmendes Gut, beispielsweise eine Datenkarte 106, wird an die Sauelemente 936, 938, 940 angesaugt, wobei die Saugelemente 936, 938 flexibel nachgeben, so dass die Saugelemente 936, 938, 940 in einer in einer Richtung gewölbten Ebene angeordnet sind (Figur 6b).

Das aufzunehmende Gut wird ebenfalls in dieser Ebene gebogen. Dies hat zum einen den Effekt, dass sich das Gut an den Rändern von einem darunterliegenden Gut abhebt, so dass dieses an dem anzuhebenden Gut nicht mehr anhaftet.

Des Weiteren wird die Ausdehnung des Gutes in einer Richtung B quer zur Ansaugrichtung verkürzt, während das darunterliegende Gut, da dieses nicht durchgebogen wird, in dieser Richtung B eine größere Ausdehnung hat.

An einem Magazin 942, in dem das Gut gelagert ist, können Abstreifer 944 vorgesehen sein, die durch gegeneinander gerichtete Kanten gebildet sind, deren Abstand kleiner ist als die Ausdehnung in Richtung B des flächigen Gutes in ebenem Zustand aber größer als die Ausdehnung in Richtung B des gebogenen Gutes. Das gehaltene, gebogene Gut kann also zwischen den Abstreifern 944 hindurch angehoben werden, während das darunterliegende, nicht gebogene Gut durch die Abstreifer 944 zurückgehalten wird. Somit ist sichergestellt, dass jeweils nur ein Gut angehoben wird.

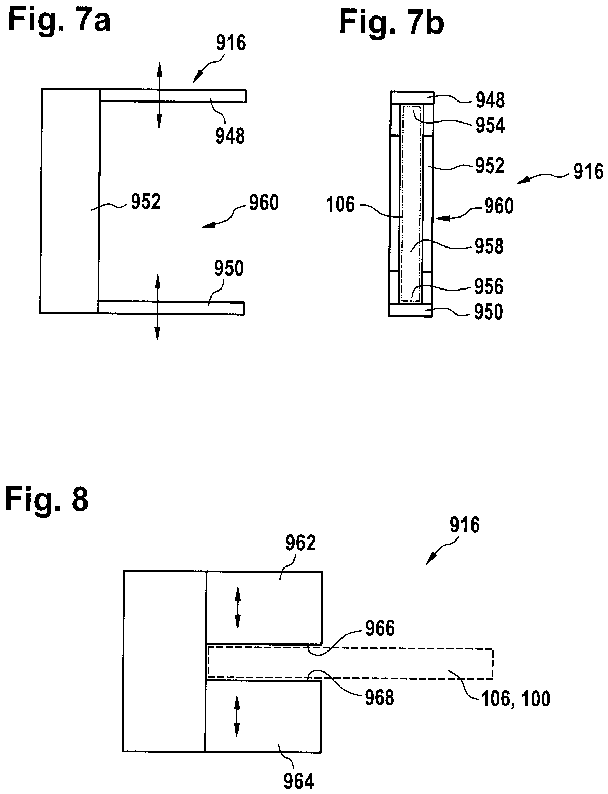

Die Halteeinheit 916 ist ein Greifer, der eine oder mehrere flächige Elemente greifen kann. Beispiele für solche Greifer sind in den Figuren 7a und 7b sowie in Figur 8 gezeigt.

Die in den Figuren 7a und 7b gezeigte Halteeinheit 912 hat zwei im Wesentlichen parallele, in einer Ebene angeordnete Halteelemente 948, 950 sowie einen Haltesteg 952. Der Haltesteg 952 ist zwischen den Halteelementen 948, 950 angeordnet und verbindet diese. Beispielsweise ist der Haltesteg 952 eine Schiene, in der die Halteelemente 948, 950 verschiebbar gelagert sind. Die Halteelemente 948, 950 sind in der Ebene bewegbar und können parallel zueinander aufeinander zu bzw. voneinander weg bewegt werden.

Wie in Figur 7b zu sehen ist, weisen die Halteelemente 948, 950 sowie der Haltesteg 952 jeweils eine Nut 954, 956, 958 auf. Die Nuten 954, 956 der Halteelemente 948, 950 sind auf den einander zugewandten Flächen der Halteelemente 948, 950 angeordnet. Die Nuten 954, 956 der Halteelemente 948, 950 erstrecken sich jeweils bis zum freien Ende der Halteelemente 948, 950. Die Nut 958 des Haltesteges 952 ist auf der zu den freien Enden der Halteelemente gerichteten Fläche des Haltesteges 952 vorgesehen. Die Halteelemente 948, 950 und der Haltesteg 952 bilden somit eine U-förmige Aufnahme 960, wobei die Breite der Aufnahme 960 durch Verschieben der Halteelemente 948, 950 variiert werden kann.

An den freien Enden der Halteelemente 948, 950 können des Weiteren Einführschrägen, Sensoren oder andere geeignete Mittel zur Ausrichtung der Aufnahme 960 zu einem aufzunehmenden Gut vorhanden sein.

Die Halteeinheit 916 ist zum Halten eines Gegenstandes mit einer hohen Eigensteifigkeit vorgesehen, beispielsweise einer Datenkarte 106. Die Datenkarte 106 kann in die Aufnahme 960 eingeschoben werden, bis ein Rand der Datenkarte 106 am Haltesteg 952, insbesondere in der Nut 958 des Haltesteges 952, anliegt. Anschließend werden die Halteelemente 948, 950 durch den Antrieb 918 aufeinander zu bewegt, bis die Halteelemente 948, 950 an den Rändern der Datenkarte 106 anliegen bzw. sich die Ränder der Datenkarte 106 in den Nuten 954, 956 befinden und die Datenkarte 106 zwischen den Halteelementen 948, 950 geklemmt ist.

Der Vorteil dieser Halteeinheit liegt darin, dass die Vorder- und Rückseite der Datenkarte 106 frei zugänglich sind und somit Informationen der Datenkarte 106 optisch ausgelesen werden können, beispielsweise ein Identifikationsmerkmal der Datenkarte 106. Des Weiteren wird die Datenkarte 106 lediglich an Rand gehalten. Dieser Rand wird bei nachfolgenden Bearbeitungsschritten entfernt, so dass ausgeschlossen werden kann, dass auf der verbleibenden Datenkarte 106 Kratzer oder Beschädigungen durch die Halteeinheit 912 entstehen können.

Die Länge der Halteelemente 948, 950 kann so bemessen sein, dass jeweils der gesamte Rand der Datenkarte 106 am Halteelement anliegt. Es ist aber auch möglich, dass die Halteelemente 948, 950 kürzer sind als die Ränder der Datenkarte 106, so dass die Ränder zur abschnittsweise gehalten sind.

Alternativ sind auch Ausführungsformen mit lediglich zwei gegenüberliegenden Halteelementen 948, 950 oder einem quer verlaufenden Haltesteg 952, der die Datenkarte 106 klemmt, möglich.

Optional können die Halteelemente 928, 930 und/oder der Haltesteg 926 jeweils durch zwei parallele Schenkel gebildet sein, die die Nut begrenzen. Die Schenkel der Halteelemente 928, 930 und des Haltesteges 926 können jeweils aufeinander zu bewegbar sein, so dass der Rand der Datenkarte 106 jeweils zwischen den Schenkeln geklemmt oder die Breite der Nut 928, 930, 932 variiert werden kann.

Eine zweite Ausführungsform einer Halteeinheit 916 ist in Figur 8 dargestellt. Die Halteeinheit 914 weist zwei gegenüberliegende Klemmbacken 962, 964 auf. Die Klemmbacken 962, 964 haben jeweils eine zur andere Klemmbacke 962, 964 gerichtete, ebene Klemmfläche 966, 968. Die Klemmbacken 962, 964 können aufeinander zu bzw. voneinander weg bewegt werden, so dass ein Passbuchblock 104, ein Passbuchrohling 128, eine Datenkarte 106 oder ein Ausweis-, Wert- oder Sicherheitsdokument 100 zwischen den Klemmbacken 962, 964 geklemmt werden kann.

Die Außenkontur der Klemmbacken 962, 964 kann jeweils die Form des Ausweis-, Wert- oder Sicherheitsdokuments 100 abbildet oder kleiner sein als diese. Die Außenkontur der Klemmbacken 962, 964 kann so als Schablone bzw. Führung für ein Fräswerkzeug verwendet werden, das die Ränder des Passbuchrohlings 128 bearbeitet.

Die Halte- und Transportvorrichtung 900 und/oder die Halteeinheiten 912, 914, 916 können jeweils eine optische Erkennungseinrichtung aufweisen, die Ausrichtemarkierungen auf dem Gut erfassen und den Arm 902 und/oder die Halteeinheiten 912, 914, 916 derart steuern kann, dass das gut in einer gewünschten Orientierung von der ausgewählten Halteeinheit 912, 914, 916 aufgenommen werden kann. Die Erkennungseinrichtung kann auch auf dem aufzunehmende Gut vorhandene Identifikationsmerkmale erfassen, über die beispielsweise das Format des zu greifenden Gutes bestimmt werden kann, so dass die Halteinheit 912, 914, 916 an dieses Format angepasst werden kann.

### Bezugszeichenliste

- 100: Ausweis-, Wert- oder Sicherheitsdokument
- 102: Einband
- 104: Passbuchblock
- 106: Datenkarte
- 108: Doppelseiten
- 110: Vorblatt
- 112: Fälzelband
- 114: Naht
- 116: Passbild
- 118: Daten
- 120: Lasche
- 121: Überlappungsbereich
- 122: Mittellinie
- 124: Außenseite des Vorblattes
- 126: Innenseite des Einbandes
- 128: Passbuchrohling
- 150: System zur Herstellung eines buchförmigen Ausweis-, Wert- oder Sicherheitsdokument
- 200: Vorrichtung zur Herstellung einer Datenkarte
- 300: Zusammenstellvorrichtung
- 400: Vorrichtung zur Bereitstellung und Anbringung des Fälzelbandes
- 500: Vorrichtung zum Verbinden der Doppelseiten, des Vorblattes, des Fälzelbandes und der Lasche
- 600: Vorrichtung zum Bereitstellen des Einbandes
- 700: Klebe- und Falteinrichtung
- 800: Endbearbeitungsvorrichtung
- 850: Personalisierungsvorrichtung
- 852: Einheit der Personalisierungsvorrichtung
- 854: Einheit der Personalisierungsvorrichtung
- 856: Einheit der Personalisierungsvorrichtung
- 858: Einheit der Personalisierungsvorrichtung
- 870: Übergabeeinrichtung
- 900: Halte- und Transportvorrichtung
- 902: Arm
- 904: Segment
- 906: Fuß
- 908: Kopfteil
- 910: Antrieb
- 912: Halteeinheit
- 914: Halteeinheit
- 916: Halteeinheit
- 918: Antrieb
- 920: Antrieb
- 922: Antrieb
- 924: Steuerung
- 926: zentrale Einrichtung zur Energiebereitstellung
- 928: Druckluftleitung
- 930: Druckluftleitung
- 932: Druckluftleitung
- 934: Unterdrucksauger
- 936: Saugelement
- 938: Saugelement
- 940: Saugelement
- 942: Magazin
- 944: Abstreifer
- 948: Halteelement
- 950: Halteelement
- 952: Haltesteg
- 954: Nut
- 956: Nut
- 958: Nut
- 960: Aufnahme
- 962: Klemmbacke
- 964: Klemmbacke
- 966: Klemmfläche
- 968: Klemmfläche
- 1000: Halte- und Transportvorrichtung

## Patentansprüche

1. System (128) zur Herstellung eines buchförmigen Ausweis-, Wert- oder Sicherheitsdokuments (100), wobei das Ausweis-, Wert- oder Sicherheitsdokument (100) einen Einband (102) sowie einen Passbuchblock (104) umfassend eine Datenkarte (106), mehrere Doppelseiten (108), ein Vorblatt (110) und ein Fälzelband (112) aufweist, wobei die Datenkarte (106) eine entlang eines Randes mit der Datenkarte (106) verbundene flexible Lasche (120) aufweist, wobei die Datenkarte (106 mit der flexiblen Lasche (120), die Doppelseiten (108), das Vorblatt (110) und das Fälzelband (112) mit einer Naht (114) miteinander vernäht sind, und wobei der Einband (102) mit einer Innenseite (126) flächig mit einer Außenseite (124) des Vorblattes (110) verklebt ist, wobei das System (128) aufweist:
- zumindest zwei Vorrichtungen (200, 250, 300, 400, 500, 600, 700, 800, 850, 870) zur Bereitstellung eines Ausweis-, Wert- oder Sicherheitsdokuments (100), eines Passbuchrohlings (128), eines Passbuchblocks (104), eines Einbandes (102), Doppelseiten (108), eines Vorblatts (110) und/oder einer Datenkarte (106), und
- zumindest eine Halte- und Transportvorrichtung (900), wobei die Halte- und Transportvorrichtung (900) aufweist:
- zumindest einen verdreh- und/oder verschwenkbaren mehrgelenkigen Arm (902),
- ein am mehrgelenkigen Arm (902) gelagertes Kopfteil (908),
- zumindest zwei, insbesondere drei, am Kopfteil (908) angeordnete Halteeinheiten (912, 914, 916), wobei jede Halteeinheit (912, 914, 916) einen Antrieb (918, 920, 922) zum Betätigen der Halteeinheit (912, 914, 916) aufweist, und
- eine Steuerung (924) zur gleichzeitigen Ansteuerung der Antriebe (918, 920, 922) der Halteeinheiten (912, 914, 916) und zum Bewegen des mehrgelenkigen Armes (902),
wobei die Halte- und Transportvorrichtung (900) zur gleichzeitigen Aufnahme und zum gleichzeitigen Transport des Ausweis-, Wert- oder Sicherheitsdokuments (100), des Passbuchrohlings (128), des Passbuchblocks (104), des Einbandes (102), der Doppelseiten (108) und/oder der Datenkarte (106) zwischen den Vorrichtungen (200, 250, 300, 400, 500, 600, 700, 800, 850, 870) ausgebildet ist.

2. System (128) nach Anspruch 1, wobei im mehrgelenkigen Arm (902) der Halte- und Transportvorrichtung (900) eine zentrale Einrichtung (926) zur Energieversorgung der Antriebe (918, 920, 922) vorgesehen ist, wobei die Antriebe (918, 920, 922) jeweils mit der Einrichtung (926) verbunden sind.

3. System (128) nach Anspruch 2, wobei die Einrichtung (926) ein flüssiges oder gasförmiges Antriebsmedium bereitstellt und die Antriebe über Leitungen (928, 930, 932) mit der Einrichtung (926) verbunden sind.

4. System (128) nach einem der vorhergehenden Ansprüche, wobei zumindest eine Halteeinheit (912, 914) der Halte- und Transportvorrichtung (900) einen Unterdrucksauger (934) mit zumindest einem Saugelement (936, 938, 940) aufweist, wobei in einer ersten Alternative der Unterdrucksauger (934) mehrere, im Wesentlichen in einer Ebene verteilt angeordnete Saugelemente (936, 938, 940) aufweist und wobei die Saugelemente (936, 938, 940) in einer Saugposition, in der ein flächiges Gut an den Saugelementen (936, 938, 940) gehalten ist, in einer zumindest in einer Richtung gewölbten Ebene angeordnet sind, so dass das flächige Gut in der gewölbten Ebene gebogen wird, oder wobei es in einer zweiten Alternative nicht der Fall ist.

5. System (128) nach Anspruch 4, zweite Alternative, wobei eine Anlagefläche vorgesehen ist
wobei am Rand der Anlagefläche ein im Wesentlichen umlaufend um die Anlagefläche angeordnetes Dichtelement vorgesehen ist und/oder
wobei zumindest ein Löseelement vorgesehen ist, das von einer Ruheposition, in der das Löseelement nicht über die Ebene der Saugelemente (936, 938, 940) und/oder die Ebene der Anlagefläche hinausragt und einer Löseposition, in der das Löseelement über die Ebene der Saugelemente (936, 938, 940) und/oder die Ebene der Anlagefläche hinausragt, bewegbar ist.

6. System (128) nach einem der vorhergehenden Ansprüche, wobei Mittel zum Ausrichten der Halteeinheit der Halte- und Transportvorrichtung (900) relativ zum aufzunehmenden Gut vorgesehen sind
und/oder
wobei zumindest eine Halteinheit (916) der Halte- und Transportvorrichtung (900) zwei längliche, im Wesentlichen parallele, in einer Ebene angeordnete Halteelemente (948, 950) aufweist, wobei die Halteelemente (948, 950) in der Ebene bewegbar sind.

7. System (128) nach Anspruch 6,
wobei ein Haltesteg (952) vorgesehen ist, der die Halteelemente (948, 950) verbindet, wobei der Haltesteg (952) senkrecht zu den Halteelementen (948, 950) angeordnet ist
und/oder
wobei die Halteelemente (948, 950) und der Haltesteg (952) jeweils eine Nut (954, 956, 958) aufweisen, wobei die Nuten (954, 956) an den Halteelemente (948, 950) auf den einander zugewandten Flächen der Halteelemente (948, 950) vorgesehen ist und die Nut (958) des Haltesteges (952) auf der zu den Halteelemente (948, 950) gerichteten Fläche des Haltesteges (952) vorgesehen ist, wobei sich die Nuten (948, 950) der Halteelemente (948, 950) insbesondere jeweils bis zum freien Ende der Halteelemente (948, 950) erstrecken
und/oder
wobei die Nuten (954, 956, 958) jeweils von zwei parallelen Schenkeln begrenzt werden, insbesondere wobei die Schenkel jeweils aufeinander zu bewegbar sind.

8. System (128) nach einem der vorhergehenden Ansprüche, wobei zumindest eine Halteinheit (916) der Halteeinheit der Halte- und Transportvorrichtung (900) zwei gegenüberliegende Klemmbacken (962, 964) aufweist, zwischen denen ein Ausweis-, Wert- oder Sicherheitsdokument (100), ein Passbuchrohling (128), ein Passbuchblock (104) und/oder eine Datenkarte (106) geklemmt werden kann.

9. System (128) nach Anspruch 8, wobei die Außenkontur der Klemmbacken (962, 964) jeweils die Form des Ausweis-, Wert- oder Sicherheitsdokuments (100) abbildet oder kleiner ist als diese.

10. System (128) nach einem der vorhergehenden Ansprüche, wobei für die Halte- und Transportvorrichtung (900) eine Erkennungseinrichtung und/oder eine Ausrichteeinrichtung für das Ausweis-, Wert- oder Sicherheitsdokument (100), den Passbuchrohling (128), den Passbuchblock (104) und/oder die Datenkarte (106) vorgesehen ist, wobei die Erkennungseinrichtung zur Erfassung des Typs, der Lage und der Ausrichtung des Ausweis-, Wert- oder Sicherheitsdokument (100), des Passbuchrohling (128), des Passbuchblock (104) und/oder der Datenkarte (106) konfiguriert ist, wobei die Steuerung der Halte- und Transportvorrichtung (900) den Antrieb des Kopfteils (908) in Abhängigkeit von dem Typ des Ausweis-, Wert- oder Sicherheitsdokument (100), des Passbuchrohling (128), des Passbuchblock (104) und/oder der Datenkarte (106) steuern kann, wobei die Steuerung den Arm (902) in Abhängigkeit von der Lage des Ausweis-, Wert- oder Sicherheitsdokument (100), des Passbuchrohling (128), des Passbuchblock (104) und/oder der Datenkarte (106) steuern kann, und wobei die Steuerung die Antriebe (910, 918, 920, 922) in Abhängigkeit von der Ausrichtung des Ausweis-, Wert- oder Sicherheitsdokument (100), des Passbuchrohling (128), des Passbuchblock (104) und/oder der Datenkarte (106) steuern kann.

11. System (128) nach einem der vorhergehenden Ansprüche, wobei das Kopfteil (908) der Halte- und Transportvorrichtung (900) dreh- und/oder verschwenkbar am mehrgelenkigen Arm (902) gelagert ist und ein Antrieb zum Verdrehen und/oder Verschwenken des Kopfteils (908) vorgesehen ist.

12. System nach einem der vorhergehenden Ansprüche, wobei eine erste Vorrichtung (200) zum Anbringen einer Lasche (120) an einer Datenkarte (106), eine zweite Vorrichtung (400) zum Bereitstellen eines Vorblattes (110) mit einem daran fixierten Fälzelband (112) und eine dritte Vorrichtung (300) zum Bereitstellen von Doppelseiten (108) ausgebildet ist, wobei eine vierte Vorrichtung (500) zum Sammeln der Doppelseiten (108), der Datenkarte (106) und des Vorblattes (110) ausgebildet ist,
wobei eine erste Halteeinheit (912) zur Aufnahme der Datenkarte (106), eine zweite Halteeinheit (914) zur Aufnahme des Vorblattes (110) und eine dritte Halteeinheit (916) zur Aufnahme eines Passbuchblocks (104) ausgebildet ist, und wobei eine Transportvorrichtung zum Transport der Doppelseiten (108) von der dritten Vorrichtung (300) zur vierten Vorrichtung (500) vorgesehen ist, wobei das System (100) zur Durchführung der folgenden Schritte ausgebildet ist:
a) Bewegen der Halte- und Transportvorrichtung (900) zur ersten Vorrichtung (200) und Aufnehmen einer Datenkarte (106) mit der ersten Halteeinheit (912),
b) Bewegen der Halte- und Transportvorrichtung (900) zur zweiten Vorrichtung (400) und Aufnehmen eines Vorblattes (110) mit der zweiten Halteeinheit (914),
c) Bewegen der Halte- und Transportvorrichtung (900) zur vierten Vorrichtung (500),
d) Aufnehmen eines auf der vierten Vorrichtung (500) liegenden Passbuchblocks (104) mit der dritten Halteeinheit (916),
e) Ablegen des Vorblattes (110) mit der zweiten Halteeinheit (914) auf der vierten Vorrichtung (500),
f) Ablegen der Datenkarte (106) mit der ersten Halteeinheit (912) auf dem Vorblatt (110) auf der vierten Vorrichtung (500),
g) Auflegen der Doppelseiten (108) auf das Vorblatt (110) und die Datenkarte (106) auf der vierten Vorrichtung (500) mit der Transportvorrichtung,
h) Ausrichten der Doppelseiten (108), des Vorblattes (110) und der Datenkarte (106) relativ zueinander auf der vierten Vorrichtung (500),
i) gleichzeitig zu Schritt g) und h) Ablegen des Passbuchblocks (104), und
j) Wiederholen der Schritten a) bis i).

13. Verfahren zum Betrieb eines Systems (100) nach Anspruch 1, wobei das Verfahren ein System nach Anspruch 1 verwendet, mit folgenden Schritten:
a) Bewegen der Halte- und Transportvorrichtung (900) zur ersten Vorrichtung (200) und Aufnehmen einer Datenkarte (106) mit der ersten Halteeinheit (912),
b) Bewegen der Halte- und Transportvorrichtung (900) zur zweiten Vorrichtung (400) und Aufnehmen eines Vorblattes (110) mit der zweiten Halteeinheit (914),
c) Bewegen der Halte- und Transportvorrichtung (900) zur vierten Vorrichtung (500),
d) Aufnehmen eines auf der vierten Vorrichtung (500) liegenden Passbuchblocks (104) mit der dritten Halteeinheit (916),
e) Ablegen des Vorblattes (110) mit der zweiten Halteeinheit (914) auf der vierten Vorrichtung (500),
f) Ablegen der Datenkarte (106) mit der ersten Halteeinheit (912) auf dem Vorblatt (110) auf der vierten Vorrichtung (500),
g) Auflegen der Doppelseiten (108) auf das Vorblatt (110) und die Datenkarte (106) auf der vierten Vorrichtung (500) mit der Transportvorrichtung,
h) Ausrichten der Doppelseiten (108), des Vorblattes (110) und der Datenkarte (106) relativ zueinander auf der vierten Vorrichtung (500),
i) gleichzeitig zu Schritt g) und h) Ablegen des Passbuchblocks (104), und
j) Wiederholen der Schritten a) bis i).

14. Verfahren nach Anspruch 13, wobei in Schritt a), b) und/oder d) eine Erfassung der Lage und/oder der Ausrichtung der Datenkarte (106), des Vorblattes (110) und/oder des Passbuchblocks (104) mit einer Erkennungsvorrichtung erfolgt und anschließend eine Ausrichtung der Halteeinheit (912, 914, 916) relativ zur Datenkarte (106), zum Vorblatt (110) und/oder zum Passbuchblock (104) erfolgt.

## Claims

1. A system (128) for producing a book-shaped identification, value or security document (100), the identification, value or security document (100) having a cover (102) and a passport book body (104) comprising a data card (106), a plurality of double pages (108), a cover sheet (110) and a spine tape (112), the data card (106) having a flexible tab (120) connected to the data card (106) along one edge, the data card (106) with the flexible tab (120), the double pages (108), the cover sheet (110) and the spine tape (112) being sewn to one another by means of a seam (114), and the inside (126) of the cover (102) being glued flat to an outside (124) of the cover sheet (110), the system (128) having:
- at least two devices (200, 250, 300, 400, 500, 600, 700, 800, 850, 870) for providing an identification, value or security document (100), a passport book blank (128), a passport book body (104), a cover (102), double pages (108), a cover sheet (110) and/or a data card (106), and
- at least one holding and transport device (900), the holding and transport device (900) having:
- at least one twistable and/or pivotable multi-articulated arm (902),
- a head part (908) mounted on the multi-articulated arm (902),
- at least two, particularly three, holding units (912, 914, 916) arranged on the head part (908), each holding unit (912, 914, 916) having a drive (918, 920, 922) for actuating the holding unit (912, 914, 916), and
- a controller (924) for the simultaneous driving of the drives (918, 920, 922) of the holding units (912, 914, 916) and for moving the multi-articulated arm (902),
the holding and transport device (900) for the simultaneous picking up and for the simultaneous transport of the identification, value or security document (100), the passport book blank (128), the passport book body (104), the cover (102), the double pages (108) and/or the data card (106) being formed between the devices (200, 250, 300, 400, 500, 600, 700, 800, 850, 870).

2. The system (128) according to claim 1, wherein a central device (926) for supplying energy to the drives (918, 920, 922) is provided in the multi-articulated arm (902) of the holding and transport device (900), wherein the drives (918, 920, 922) are each connected to the device (926).

3. The system (128) according to claim 2, wherein the device (926) provides a liquid or gaseous drive medium and the drives are connected to the device (926) via lines (928, 930, 932).

4. The system (128) according to any one of the preceding claims, wherein at least one holding unit (912, 914) of the holding and transport device (900) has a vacuum suction device (934) having at least one suction element (936, 938, 940), wherein in a first alternative, the vacuum suction device (934) has a plurality of suction elements (936, 938, 940) arranged essentially distributed in one plane, and wherein the suction elements (936, 938, 940) are arranged in a suction position in which a flat item is held on the suction elements (936, 938, 940) in a plane curved at least in one direction, so that the flat item is bent in the curved plane, or wherein it is not the case in a second alternative.

5. The system (128) according to claim 4, second alternative,
wherein a contact surface is provided
wherein a sealing element arranged essentially running around the contact surface is provided at the edge of the contact surface
and/or
wherein at least one release element is provided which is movable from a rest position, in which the release element does not protrude beyond the plane of the suction elements (936, 938, 940) and/or the plane of the contact surface and a release position, in which the release element extends beyond the plane of the suction elements (936, 938, 940) and/or the plane of the contact surface.

6. The system (128) according to any one of the preceding claims, wherein means are provided for aligning the holding unit of the holding and transport device (900) relative to the item to be picked up
and/or
wherein at least one holding unit (916) of the holding and transport device (900) has two elongated, essentially parallel holding elements (948, 950) arranged in a plane, wherein the holding elements (948, 950) are movable in the plane.

7. The system (128) according to claim 6,
wherein a holding bar (952) is provided which connects the holding elements (948, 950), wherein the holding bar (952) is arranged perpendicular to the holding elements (948, 950)
and/or
wherein the holding elements (948, 950) and the holding bar (952) each have a groove (954, 956, 958), wherein the grooves (954, 956) are provided on the holding elements (948, 950) on the surfaces of the holding elements (948, 950) facing one another and the groove (958) of the holding bar (952) is provided on the surface of the holding bar (952) directed towards the holding elements (948, 950), wherein the grooves (948, 950) of the holding elements (948, 950) particularly each extend to the free end of the holding elements (948, 950)
and/or
wherein the grooves (954, 956, 958) are each delimited by two parallel legs, particularly wherein the legs can each be moved towards one another.

8. The system (128) according to any one of the preceding claims, wherein at least one holding unit (916) of the holding unit of the holding and transport device (900) has two opposing clamping jaws (962, 964), between which an identification, value or security document (100), a passport book blank (128), a passport book body (104) and/or a data card (106) can be clamped.

9. The system (128) according to claim 8, wherein the outer contour of the clamping jaws (962, 964) in each case reproduces the shape of the identification, value or security document (100) or is smaller than this.

10. The system (128) according to any one of the preceding claims, wherein a recognition device and/or an alignment device for the identification, value or security document (100), the passport book blank (128), the passport book body (104) and/or the data card (106) is provided for the holding and transport device (900), wherein the recognition device is configured for detecting the type, position and alignment of the identification, value or security document (100), the passport blank (128), the passport book body (104) and/or the data card (106), wherein the controller of the holding and transport device (900) can control the drive of the head part (908) depending on the type of identification, value or security document (100), the passport book blank (128), the passport book body (104) and/or the data card (106), wherein the controller can control the arm (902) depending on the position of the identification, value or security document (100), the passport book blank (128), the passport book body (104) and/or of the data card (106), and wherein the controller can control the drives (910, 918, 920, 922) depending on the alignment of the identification, value or security document (100), the passport book blank (128), the passport book body (104) and/or the data card (106).

11. The system (128) according to any one of the preceding claims, wherein the head part (908) of the holding and transport device (900) is rotatably and/or pivotably mounted on the multi-articulated arm (902) and a drive for rotating and/or pivoting the head part (908) is provided.

12. The system (128) according to any one of the preceding claims, wherein a first device (200) is designed for attaching a tab (120) to a data card (106), a second device (400) for providing a cover sheet (110) with a spine tape (112) fixed thereon and a third device (300) for providing double pages (108), wherein a fourth device (500) is designed for collecting the double pages (108), the data card (106) and the cover sheet (110),
wherein a first holding unit is designed (912) for picking up the data card (106), a second holding unit (914) for picking up the cover sheet (110) and a third holding unit (916) for picking up a passport book body (104), and wherein a transport device for transporting the double pages (108) from the third device (300) to the fourth device (500) is provided, wherein the system (100) is designed to carry out the following steps:
a) moving the holding and transport device (900) to the first device (200) and picking up a data card (106) by means of the first holding unit (912),
b) moving the holding and transport device (900) to the second device (400) and picking up a cover sheet (110) by means of the second holding unit (914),
c) moving the holding and transport device (900) to the fourth device (500),
d) picking up a passport book body (104) lying on the fourth device (500) by means of the third holding unit (916),
e) depositing the cover sheet (110) on the fourth device (500) by means of the second holding unit (914),
f) depositing the data card (106) by means of the first holding unit (912) on the cover sheet (110) on the fourth device (500),
g) placing the double pages (108) on the cover sheet (110) and the data card (106) on the fourth device (500) by means of the transport device,
h) aligning the double pages (108), the cover sheet (110) and the data card (106) relative to one another on the fourth device (500),
i) at the same time as step g) and h), depositing the passport book body (104), and
j) repeating steps a) to i).

13. A method of operating a system (100) according to claim 1, the method using a system according to claim 1, comprising the steps of:
a) moving the holding and transport device (900) to the first device (200) and picking up a data card (106) by means of the first holding unit (912),
b) moving the holding and transport device (900) to the second device (400) and picking up a cover sheet (110) by means of the second holding unit (914),
c) moving the holding and transport device (900) to the fourth device (500),
d) picking up a passport book body (104) lying on the fourth device (500) by means of the third holding unit (916),
e) depositing the cover sheet (110) on the fourth device (500) by means of the second holding unit (914),
f) depositing the data card (106) by means of the first holding unit (912) on the cover sheet (110) on the fourth device (500),
g) placing the double pages (108) on the cover sheet (110) and the data card (106) on the fourth device (500) by means of the transport device,
h) aligning the double pages (108), the cover sheet (110) and the data card (106) relative to one another on the fourth device (500),
i) at the same time as step g) and h), depositing the passport book body (104), and
j) repeating steps a) to i).

14. The method according to claim 13, wherein in step a), b) and/or d), the position and/or the alignment of the data card (106), the cover sheet (110) and/or the passport book body (104) is detected by means of a recognition device and then the holding unit (912, 914, 916) is aligned relative to the data card (106), to the cover sheet (110) and/or to the passport book body (104).

## Revendications

1. Système (128) de production d'un document d'identité, de valeur ou de sécurité (100) en forme de livret, dans lequel le document d'identité, de valeur ou de sécurité (100) présente une reliure (102), ainsi qu'un bloc-livret passeport (104) comprenant une carte de données (106), plusieurs pages doubles (108), une page de garde (110) et une bande d'onglets (112), dans lequel la carte de données (106) présente une languette (120) souple reliée avec la carte de données (106) le long d'un bord, dans lequel la carte de données (106) avec la languette (120) souple, les doubles pages (108), la page de garde (110) et la bande d'onglets (112) sont cousues ensemble avec une couture (114), et dans lequel la reliure (102) avec une page intérieure (126) est collée à plat avec une page extérieure (124) de la page de garde (110), le système (128) présentant :
- au moins deux dispositifs (200, 250, 300, 400, 500, 600, 700, 800, 850, 870) pour la mise au point d'un document d'identité, de valeur ou de sécurité (100), d'une ébauche de livret-passeport (128), d'un bloc-livret passeport (104), d'une reliure (102), de doubles pages (108), d'une page de garde (110) et/ou d'une carte de données (106), et
- au moins un dispositif de maintien et de transport (900), où le dispositif de maintien et de transport (900) présente :
- au moins un bras (902) à plusieurs articulations rotatif et/ou pivotable,
- une pièce frontale (908) logée sur le bras (902) à plusieurs articulations,
- au moins deux, notamment trois, unités de maintien (912, 914, 916) disposées sur la pièce frontale (908), où chaque unité de maintien (912, 914, 916) présente un entraînement (918, 920, 922) pour l'actionnement de l'unité de maintien (912, 914, 916), et
- une commande (914) pour le démarrage simultané des entraînements (918, 920, 922) des unités de maintien (912, 914, 916) et pour le déplacement du bras (902) à plusieurs articulations,
dans lequel le dispositif de maintien et de transport (900) est conçu pour la réception simultanée et pour le transport simultané du document d'identité, de valeur ou de sécurité (100), de l'ébauche de livret-passeport (128), du bloc-livret passeport (104), de la reliure (102), des doubles pages (108), et/ou de la carte de données (106) entre les dispositifs (200, 250, 300, 400, 500, 600, 700, 800, 850, 870).

2. Système (128) selon la revendication 1, dans lequel un dispositif central (926) pour l'approvisionnement en énergie des entraînements (918, 920, 922) est prévu dans le bras (902) à plusieurs articulations du dispositif de maintien et de transport (900), où les entraînements (918, 920, 922) sont respectivement reliés avec le dispositif (926).

3. Système (128) selon la revendication 2, dans lequel le dispositif (926) procure un milieu d'entraînement liquide ou sous forme de gaz et les entraînements sont reliés avec le dispositif (926) par le biais de conduites (928, 930, 932).

4. Système (128) selon l'une des revendications précédentes, dans lequel au moins une unité de maintien (912, 914) du dispositif de maintien et de transport (900) présente un dispositif d'aspiration par dépression (934) avec au moins un élément d'aspiration (936, 938, 940),où le dispositif d'aspiration par dépression (934) présente, dans une première alternative, plusieurs, éléments d'aspiration (936, 938, 940) disposés dispersés dans l'ensemble dans un plan, et où les éléments d'aspiration (936, 938, 940) sont disposés dans au moins un plan recourbé dans une direction, dans une position d'aspiration, dans laquelle un article plat est tenu sur les éléments d'aspiration (936, 938, 940), de sorte que l'article plat est recourbé dans le plan recourbé, ou dans lequel, ce n'est pas le cas dans une deuxième alternative.

5. Système (128) selon la revendication 4, deuxième alternative, dans lequel une surface d'appui est prévue,
dans lequel un élément d'étanchéité est prévu disposé autour de la surface d'appui en faisant essentiellement le tour sur le bord de la surface d'appui,
et/ou
dans lequel au moins un élément de détachement est prévu qui peut se déplacer à partir d'une position de repos, dans laquelle l'élément de détachement ne fait pas saillie par-dessus le plan des éléments d'aspiration (936, 938, 940), et/ou le plan de la surface d'appui, et une position de détachement, dans laquelle l'élément de détachement fait saillie par-dessus le plan des éléments d'aspiration (936, 938, 940) et/ou le plan de la surface d'appui.

6. Système (128) selon l'une des revendications précédentes, dans lequel des moyens permettant d'orienter l'unité de maintien du dispositif de maintien et de transport (900) par rapport au produit à réceptionner sont prévus
et/ou
dans lequel au moins une unité de maintien (916) du dispositif de maintien et de transport (900) présente deux éléments de maintien (948, 950) allongés disposés essentiellement de manière parallèle dans un plan, où les éléments de maintien (948, 950) sont mobiles dans le plan.

7. Système (128) selon la revendication 6,
dans lequel une barre de maintien (952) est prévue, qui relie les éléments de maintien (948, 950), où la barre de maintien (952) est disposée perpendiculairement par rapport aux éléments de maintien (948, 950),
et/ou
dans lequel les éléments de maintien (948, 950) et la barre de maintien (952) présentent respectivement une rainure (954, 956, 958), où les rainures (954, 956) sur les éléments de maintien (948, 950) sont prévues sur les surfaces des éléments de maintien (948, 950) orientées l'une vers l'autre et la rainure (958) de la barre de maintien (952) est prévue sur la surface de la barre de maintien (952) orientée vers les éléments de maintien (948, 950), où les rainures (948, 950) des éléments de maintien (948, 950) s'étendent en particulier respectivement jusqu'à l'extrémité libre des éléments de maintien (948, 950),
et/ou
dans lequel les rainures (954, 956, 958) sont délimitées par respectivement deux épaulements parallèles, notamment, où les épaulements sont mobiles respectivement l'un sur l'autre.

8. Système (128) selon l'une des revendications précédentes, dans lequel au moins une unité de maintien (916) du dispositif de maintien et de transport (900) présente deux mâchoires de serrage (962, 964) situées l'une en face de l'autre, entre lesquelles un document d'identité, de valeur ou de sécurité (100), une ébauche de livret-passeport (128), un bloc-livret passeport (104) et/ou une carte de données (106), peut être serré.

9. Système (128) selon la revendication 8, dans lequel le contour extérieur des mâchoires de serrage (962, 964) représente respectivement la forme du document d'identité, de valeur ou de sécurité (100) ou est plus petit que celle-ci.

10. Système (128) selon l'une des revendications précédentes, dans lequel un dispositif de reconnaissance et/ou un dispositif d'orientation pour le document d'identité, de valeur ou de sécurité (100), l'ébauche du livret passeport (128), le bloc-livret passeport (104) et/ou la carte de données (106) est prévu pour le dispositif de maintien et de transport (900), où le dispositif de reconnaissance est conçu pour la détection du type, de la position et de l'orientation du document d'identité, de valeur ou de sécurité (100), de l'ébauche du livret passeport (128), du bloc-livret passeport (104) et/ou de la carte de données (106), où la commande du dispositif de maintien et de transport (900) peut commander l'entrainement de la pièce frontale (908) en fonction du type de document d'identité, de valeur ou de sécurité (100), d'ébauche du livret passeport (128), de bloc-livret passeport (104) et/ou de carte de données (106), où la commande peut commander le bras (902) en fonction de la position du document d'identité, de valeur ou de sécurité (100), de l'ébauche du livret passeport (128), du bloc-livret passeport (104) et/ou de la carte de données (106), et où la commande peut commander les entraînements (910, 918, 920, 922) en fonction de l'orientation du document d'identité, de valeur ou de sécurité (100), de l'ébauche du livret passeport (128), du bloc-livret passeport (104) et/ou de la carte de données (106).

11. Système (128) selon l'une des revendications précédentes, dans lequel la pièce frontale (908) du dispositif de maintien et de transport (900) est logée rotative et/ou pivotable sur le bras (902) à articulations multiples et un entraînement est prévu pour la rotation et/ou le pivotement de la pièce frontale (908).

12. Système (128) selon l'une des revendications précédentes, dans lequel un premier dispositif (200) est conçu pour la mise en place d'une languette (120) sur une carte de données (106), un deuxième dispositif (400) est conçu pour la mise au point d'une page de garde (110) avec une bande d'onglets (112) y étant fixée et un troisième dispositif (300) est conçu pour la mise au point de doubles pages (108), où un quatrième dispositif (500) est conçu pour la collecte des doubles pages (108), de la carte de données (106) et de la page de garde (110),
dans lequel une première unité de maintien (912) est conçue pour la réception de la carte de données (106), une deuxième unité de maintien (914) est conçue pour la réception de la page de garde (110) et une troisième unité de maintien (916) est conçue pour la réception d'un bloc-livret passeport (104), et dans lequel un dispositif de transport est prévu pour le transport des doubles pages (108) du troisième dispositif (300) vers le quatrième dispositif (500), où le système (100) est conçu pour l'exécution des étapes suivantes :
a) le déplacement du dispositif de maintien et de transport (900) vers le premier dispositif (200) et le prélèvement d'une carte de données (106) avec la première unité de maintien (912),
b) le déplacement du dispositif de maintien et de transport (900) vers le deuxième dispositif (400) et le prélèvement d'une page de garde (110) avec la deuxième unité de maintien (914),
c) le déplacement du dispositif de maintien et de transport (900) vers le quatrième dispositif (500),
d) le prélèvement d'un bloc-livret passeport (104) posé sur le quatrième dispositif (500) avec la troisième unité de maintien (916),
e) le dépôt de la page de garde (110) sur le quatrième dispositif (500) avec la deuxième unité de maintien (914),
f) le dépôt de la carte de données (106) sur la page de garde (110) sur le quatrième dispositif (500) avec la première unité de maintien (912),
g) la mise en place des doubles pages (108) sur la page de garde (110) et la carte de données (106) sur le quatrième dispositif (500) avec le dispositif de transport,
h) la disposition des doubles pages (108), de la page de garde (110) et de la carte de données (106) les unes par rapport aux autres sur le quatrième dispositif (500),
i) simultanément aux étapes g) et h), le dépôt du bloc-livret passeport (104), et
j) la répétition des étapes a) à i).

13. Procédé de fonctionnement d'un système (100) selon la revendication 1, où le procédé emploie un système selon la revendication 1, avec les étapes suivantes :
a) le déplacement du dispositif de maintien et de transport (900) vers le premier dispositif (200) et le prélèvement d'une carte de données (106) avec la première unité de maintien (912),
b) le déplacement du dispositif de maintien et de transport (900) vers le deuxième dispositif (400) et le prélèvement d'une page de garde (110) avec la deuxième unité de maintien (914),
c) le déplacement du dispositif de maintien et de transport (900) vers le quatrième dispositif (500),
d) le prélèvement d'un bloc-livret passeport (104) posé sur le quatrième dispositif (500) avec la troisième unité de maintien (916),
e) le dépôt de la page de garde (110) sur le quatrième dispositif (500) avec la deuxième unité de maintien (914),
f) le dépôt de la carte de donnée (106) sur la page de garde (110) sur le quatrième dispositif (500) avec la première unité de maintien (912),
g) la mise en place des doubles pages (108) sur la page de garde (110) et la carte de données (106) sur le quatrième dispositif (500) avec le dispositif de transport,
h) la disposition des doubles pages (108), de la page de garde (110) et de la carte de données (106) les unes par rapport aux autres sur le quatrième dispositif (500),
i) simultanément aux étapes g) et h), le dépôt du bloc-livret passeport (104), et
j) la répétition des étapes a) à i).

14. Procédé selon la revendication 13, dans lequel, dans les étapes a), b) et/ou c), il y a une détection de la position et/ou de l'orientation de la carte de données (106), de la page de garde (110) et/ou du bloc-livret passeport (104) avec un dispositif de reconnaissance et ensuite il y a une orientation de l'unité de maintien (912, 914, 916) par rapport à la carte de données (106), par rapport à la page de garde (110) et/ou par rapport au bloc-livret passeport (104).
